# EUROPEAN PATENT SPECIFICATION

(11) **EP 0 697 085 B1**
(45) Date of publication and mention of the grant of the patent: **01.09.1999**
(21) Application number: 94914851.4
(22) Date of filing: 20.04.1994
(51) Int. Cl.: F25B 17/08

(54) **IMPROVED HEAT TRANSFER APPARATUS AND METHODS FOR SOLID-VAPOR SORPTION SYSTEMS**
WÄRMEÜBERTRAGUNGSVORRICHTUNG UND VERFAHREN FÜR FESTSTOFF-DAMPF-SORPTIONSANLAGEN
APPAREIL ET PROCEDES DE TRANSFERT THERMIQUE PERFECTIONNES POUR DES SYSTEMES DE SORPTION DE SOLIDE-VAPEUR

(30) Priority: 11.05.1993 US 59548
(43) Date of publication of application: 21.02.1996
(73) Proprietor: ROCKY RESEARCH, Boulder City, NV 89005 (US)
(72) Inventor: KIROL, Lance, D., Boulder City, NV 89005 (US); ROCKENFELLER, Uwe, Boulder City, NV 89005 (US)
(74) Representative: Maury, Richard Philip
(86) International application number: US9404343
(87) International publication number: WO9427098

(56) References cited:
- WO-A-92/22776
- DE-A- 3 509 564
- FR-A- 2 679 633
- US-A- 1 954 056
- US-A- 2 257 735
- US-A- 2 276 947
- US-A- 2 340 886
- US-A- 2 461 262
- US-A- 2 513 148
- US-A- 2 539 986
- US-A- 2 587 996
- US-A- 4 183 227

## Description

### Background of the Invention

Solid-vapor sorption systems, such as those described in the aforesaid application, are used for cooling and refrigeration. These systems range from small devices having a cooling power of a few watts, to relatively large systems producing megawatts of cooling. The larger systems, for example used in commercial HVAC applications, are usually designed to reject heat by using heat transfer fluids directed to air coils, air-cooled condensers, evaporative condensers, cooling towers, or to ground or surface water. Pumped loops for transferring sorber heat to such heat rejection means are well-known to those skilled in the art. However, in relatively small systems, such as appliances disclosed in U.S. patent no. 5,161,389, and in apparatus for electronic cooling disclosed in U.S. Patent No. 5,271,239 the use of extra cooling loops, and/or pump loops for transferring sorber heat to heat rejection is not practical.

In operating sorption systems described in the aforesaid patent and co-pending application as well as other sorption systems in which a gaseous reactant is adsorbed on a solid reactant, suitable components must be provided to reject heat. Systems in which the gaseous reactant is alternately adsorbed on and desorbed from the adsorbent provide two sources of heat which must be rejected during continuous operation: heat of condensation of the refrigerant, and heat of adsorption at the adsorbing reactor. Preferably, means for rejecting heat to the atmosphere with no or minimal electrical power consumption are provided. For example, heat of condensation can usually be rejected in an air-cooled condenser, using natural or forced convection over the condenser coil.

In the sorption solid-vapor reaction system using single or multiple sorbers to alternately adsorb and desorb refrigerant, conflicting heat transfer requirements must be considered and satisfied. In the desorption phase, it is desirable to utilize all of the energy from the heating means for driving the desorption reaction. The sorber may be insulated or otherwise provided with means for minimizing the heat loss since any heat losses to the environment reduce overall system efficiency and increase size and capacity requirements of the heat source. On the other hand, during the adsorption phase, efficient heat removal from the sorber is necessary, and must be transferred from the sorber to a heat rejection component, or be rejected directly from the sorber itself. The problem is exacerbated by the fact that elevated desorption temperatures create sorber-to-ambient temperature differentials favoring heat losses precisely at the time when such heat loss is undesirable.

### Summary of the Invention

In our aforesaid U.S. Patent No. 5,271,239 there is disclosed an invention of using expanding vaporized heat transfer fluid from a desorbing reactor for directing or driving liquid heat transfer fluid to an adsorbing reactor for heat rejection of the exothermic reaction therein. The heat transfer fluid is a phase-change composition whereby condensed or liquid phase heat transfer fluid in contact with the adsorbing reactor heat transfer surfaces is vaporized thereby assisting in cooling the reactor and rejecting heat therefrom.

We also acknowledge the disclosure in US-A-2587996, US-A-2513148 and FR-A-2679633 of similar sorption methods and systems, having the features recited in the pre-characterising portions respectively of Claims 1 and 45.

The present invention is directed to improved systems and methods of using such means for rejecting heat from an adsorbing reactor in solid-vapor sorption systems as described above. The present invention is directed to solid-vapor sorption systems providing heat transfer to heat rejection components separate from the sorber. The invention provides a cooling method as defined in Claim 1, and a sorption reaction system apparatus as defined in Claim 45.

The system includes apparatus in which the system refrigerant is used as the heat transfer fluid for cooling an adsorbing reactor. The system of the invention includes activation of a heat rejection loop for cooling an adsorbing reactor using displacement of the heat transfer fluid without requiring thermostat or solenoid valve control of the cooling loop. Apparatus is also disclosed for transferring heat from a single heat source to either of two reactors to provide continuous refrigeration or cooling.

The systems, apparatus, components and methods for achieving the improvements according to the invention will be evident from the following detailed description of preferred embodiments, given by way of example only, with reference to the accompanying drawings, in which:-
Fig.1 schematically illustrates a solid-vapor sorption system incorporating a bubble-pump assisted thermosyphon for transferring sorption energy to a condenser;
Fig. 2 is an enlarged view showing a flexible bubble-pump connector;
Fig. 3 illustrates a system, which does not embody the invention, incorporating a vapor pump comprising a heater and check valve;
Fig. 4 illustrates a solid-vapor sorption system incorporating an ejector-pump assisted thermosyphon;
Fig. 5 illustrates a sorption system using a pressure deactivated thermosyphon;
Fig. 6 illustrates sorption system incorporating a pressure deactivated thermosyphon using refrigerant pressure operated valves;
Fig. 7 illustrates sorption system using a pressure deactivated thermosyphon system incorporating separate circuits for condensing heat transfer fluid and the system refrigerant;
Fig. 8 illustrates a sorption system having pressure activated thermosyphon and using a single reflux type condenser for transfer of sorption energy;
Fig. 9 shows a sorption system with a pressure activated thermosyphon incorporating separate condenser circuits for each reactor;
Fig. 10 shows a sorption system with a pressure activated thermosyphon incorporating separate heat transfer fluid and refrigerant condenser circuits;
Fig. 11 shows a two-stage constant pressure engine staging system with a pressure activated thermosyphon on both stages;
Fig. 12 shows a two-stage constant pressure engine staging system with first stage thermosyphon activated by second stage refrigerant pressure;
Fig. 13 illustrates a periodic refrigeration system, which does not embody the invention, with a heat rejection thermosyphon deactivated by a valve and refrigerant pressure;
Fig. 14 shows a three reactor system using mechanical pumps for activating phase change cooling; and
Fig. 15 illustrates a single-source means, which does not embody the invention, for heating a dual sorber system.

### Detailed Description of the Invention

The systems and apparatus disclosed herein may be used for any solid-vapour sorption including the complex compound systems disclosed in the aforesaid applications, the disclosures thereof which are incorporated herein by reference. The systems of the invention may also be used for other solid-gas adsorbents including metal hydrides, activated carbons, silica gel, zeolites, carbonates, oxides, etc., and may be used for adsorbing any suitable refrigerant-gaseous reactants such as hydrogen, methane, ethane, helium, HFCs and HCFCs. However, the systems herein are especially suitable for complex compound sorber systems of the aforesaid type for adsorbing polar refrigerants such as ammonia, water, methanol, alkanolamines, alkylamines, sulfur dioxide and phosphine on solid metal salts. Such complex compound reactor systems are especially useful in the design of small, compact devices operating at high power densities as described in U.S. application serial no. 07/931,036, filed August 14, 1992 and 07/975,973 filed November 13, 1992, and specifically using the complex compounds having increased reaction rates formed by restricting the volumetric expansion thereof during adsorption of the polar refrigerant on the metal salt as disclosed therein. Accordingly, the systems and methods of the present invention preferably incorporate and use reactors containing a complex compound of one of the aforesaid polar refrigerants, and particularly preferred ammonia, adsorbed on a metal salt comprising a halide, nitrate, nitrite, oxalate, sulfate, or sulfite of an alkali metal, alkaline earth metal, transition metal, zinc, cadmium, tin, aluminium, sodium boroflouride, or double metal chloride, and in which the volumetric expansion of the complex compound is limited or restricted during at least the initial adsorption reaction to form at least a partially coherent, cohesive, physically self-supporting reaction product capable of increased chemisorption reaction rates as compared to a complex compound formed without so limiting the volumetric expansion. Other specific and useful preferred complex compounds are listed in U.S. Patent No. 4,848,994. Especially preferred complex compounds are those listed produced by adsorbing ammonia on SrCl₂, SrBr₂, CaCl₂, CaBr₂, CaI₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ or CrCl₂ or mixtures thereof while restricting the volumetric expansion of the complex compound formed during the adsorption reaction. These salts may also be mixed with a zeolite, activated carbon, activated alumina or silica gel prior to the initial ammonia adsorption. Preparation of the aforesaid preferred compounds used in the reactors of apparatus and systems of the present invention are capable of achieving maximum power density per mass of adsorbent, maximum power density per mass of reactor and maximum power density per desired or needed reactor volume. Half cycle times, i.e., adsorption or desorption reaction times of the reactions having such improved reaction rates are carried out in less than 30 minutes, preferably in less than about 20 minutes and typically between about 3 and about 15 minutes. As used herein, the term "adsorption" is intended to cover any such solid-vapor sorption reactions, regardless of whether it is termed adsorption or absorption.

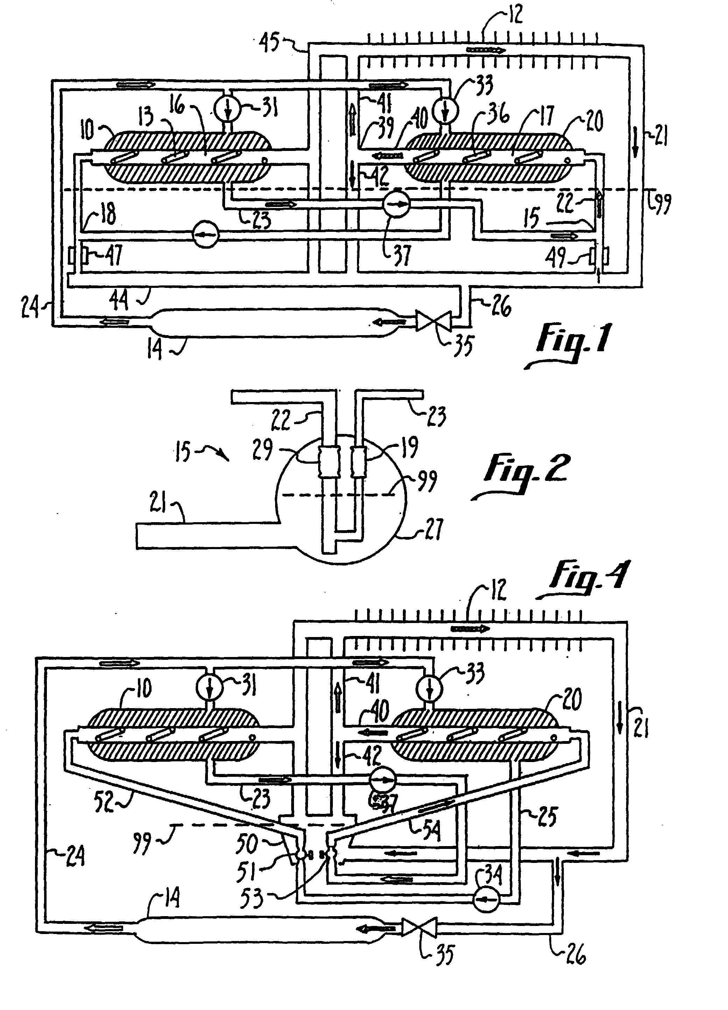

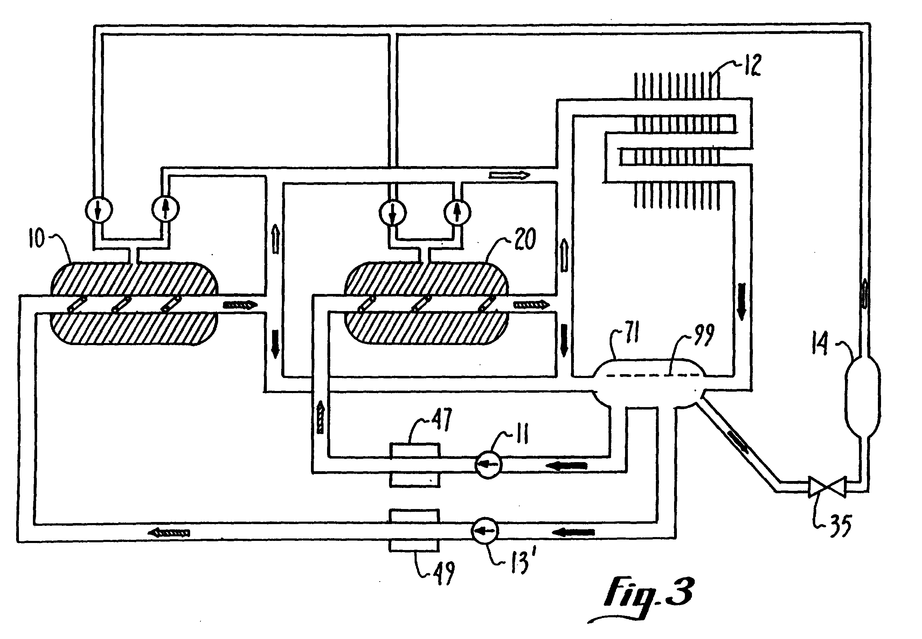

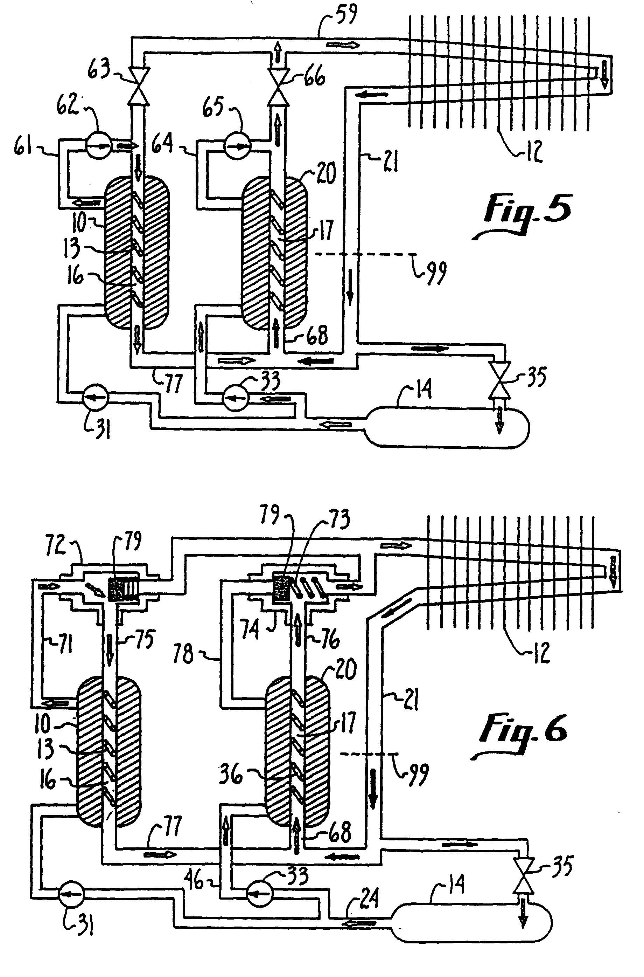

The basic solid-vapor sorption systems used herein are schematically illustrated in Figs. 1 - 10 incorporating two sorbers, also referred to herein as reactors, one of which is adsorbing while the other is desorbing. The adsorbing reactor or sorber to be adsorbed, is cooled to near ambient temperature to lower the vapor pressure of the absorbent therein. As the cooled adsorbent vapor pressure drops below the evaporator pressure the sorber draws refrigerant vapor from the evaporator. This flow of refrigerant from the evaporator provides the refrigeration or cooling effect of the system. The control of the flow of refrigerant to and from the adsorbing reactor may be passive, for example, using check valves or back-pressure control valves, or the flow may be actively controlled, using for example, solenoid valves, or motor or pressure operated valves. Heat created during the exothermic adsorption reaction is removed to maintain the sorber at the proper adsorption temperature. While the adsorbing reactor is cooled to initiate adsorption, the other sorber is heated until the vapor of the adsorbent therein is greater than the condenser pressure, at which time refrigerant desorption to the condenser begins. Heat supplied to the desorption reactor provides the necessary energy required to drive the endothermic desorption and to overcome heat loss in the system. At the end of one sorption half-cycle or phase, the roles of the two sorbers are reversed.

The systems schematically illustrated in Figs. 1 - 14 illustrate the invention of an apparatus and method of rejecting the heat of adsorption created in a reactor during adsorption. In the various apparatus embodiments shown, the systems utilize a heat transfer fluid having a phase change from liquid to gas at or below the temperature of the adsorbing reactor. The heat transfer fluid, which may be liquid or a mixture of liquid phase and gaseous phase, is directed to the adsorbing reactor and is exposed in heat exchange communication with the adsorbent during the exothermic adsorption reaction. The heat from the exothermic reaction is transferred to the heat transfer fluid thereby vaporizing at least a portion of the liquid phase thereof and rejecting the heat. The systems shown incorporate a thermosyphon heat transfer loop which provides or assists in circulation of the heat transfer fluid from the adsorbing reactor to the condenser. As used herein the term thermosyphon is intended to include any loop or system in which reactor cooling results from phase change of liquid heat transfer fluid or refrigerant, the condensate of which is returned to system liquid level by gravity. The systems may be designed to use the system refrigerant as the heat transfer fluid, or for use of different, separate compositions.

In the various systems illustrated herein, it is to be understood that the sorbers or reactors may incorporate internal and/or external heat transfer surfaces. The condensers may incorporate natural or forced (fan) convective cooling. Different types of expansion devices such as a capillary tube, expansion valve, orifices, porous media, etc. may be used on the evaporator inlet. The check valves or one-way valves may be replaced by active control valves, such as solenoids. The heater elements for driving the desorption reaction may be mounted on heat-transfer surfaces, as illustrated or embedded in the sorbers. Heating means may comprise electrical resistance wires or heaters, or use heat transfer liquids or hot water or steam tubes or flue-gas tubes for directing hot gases of combustion, radiant heating, or any other suitable method of thermal conductance. Thus, the specific apparatus components are shown for purposes of illustration only and the invention is not intended to be limited to the examples shown unless so stated.

In Fig. 1 there is illustrated a solid-vapor adsorption system. The system is shown in the half-cycle during which reactor 10 is desorbing while reactor 20 is adsorbing. Desorbing reactor 10 is heated by energized heating elements 13 to provide the necessary heat for driving the endothermic desorption reaction as previously described. The heat transfer surface of adsorption reactor 20 communicates with condenser 12 via conduits 40 and 41. In the system illustrated, the refrigerant is used as the gaseous reactant which is adsorbed and desorbed on the solid adsorbent, and as the heat transfer fluid for cooling the adsorbing reactor. In the schematically illustrated apparatus of Fig. 1, as well as in Figs. 3 - 11, the arrows in the various conduits are shown in the direction of refrigerant flow during the aforesaid half-cycle. The clear or white centered arrows illustrate vapor refrigerant flow, the hatched arrows show a two-phase refrigerant flow, and the solid dark centered arrows indicate liquid refrigerant flow. Piping below the sorbers is filled with liquid refrigerant approximately to level 99.

With heater element 13 in sorber 10 energized, the sorbent is heated until its vapor pressure is greater than the pressure in condenser 12. At that time, refrigerant vapor flows from sorber 10 through pipe 23 and check valve 37 to vertical tube 22 which is connected to the heat transfer tube 17 in sorber 20. Vapor flowing into the vertical tube 22 creates a "bubble-pump" effect and lifts liquid refrigerant standing in the tube to the heat transfer surfaces of heat transfer tube 17. Thus, the heat transfer liquid directed into reactor 20 is a mixture of liquid and vapor phase refrigerant. As the liquid refrigerant vaporizes on the reactor heat transfer surfaces, completely or partially, it cools reactor 20 to near condenser temperature, and adsorption of the refrigerant on the sorbent begins. Heat generated by the exothermic adsorption reaction is removed by the vaporizing refrigerant, and the sorber is maintained within a few degrees of condenser temperature. The two-phase refrigerant mixture leaving reactor 20 is directed to separator 39, typically a tee in the tubing, with the vapor portion of the refrigerant directed to the condenser 12 via pipe 41, and liquid refrigerant portion returned to the tubing below the sorbers via line 42. Vaporized refrigerant is condensed in condenser 12 and returned to the liquid in the lower tubing via pipe 21. Liquid refrigerant in the lower tubing 44 is also directed via pipe 26 through expansion valve 35, to feed the evaporator 14. Gaseous refrigerant from the evaporator is directed via pipe 24 into the adsorbing reactor. One way valves 31 and 33 direct refrigerant to a reactor during the adsorption reaction phase. After completion of the above described half-cycle, the functions of the sorbers are reversed, with the heating element 13 in reactor 10 deenergized and the heating element 36 in reactor 20 energized. As the adsorbent in reactor 12 is heated sufficiently to begin desorption, the bubble-pump 18 is activated to provide cooling to reactor 10, at which time adsorption therein begins. The closed conduit loop which directs refrigerant into the adsorbing reactor, on to the condenser and back to the reactor via the bubble pump forms the thermosyphon previously referred to.

Bubble pumps, often referred to as gas-lift pumps, used to provide the condensed coolant to the adsorbing reactor are, in accordance with the invention, driven by vapor desorbed from the opposing reactor, as described above and illustrated in Fig. 1.

Bubble pumps can be driven by a heater, typically electrical, on the vertical riser of the pump. The heater must be located on a vertical or nearly vertical tube or pipe and below the liquid level. Such a heater located on a liquid refrigerant line generates vapor thus reducing density of the coolant in the vertical riser relative to liquid standing in the rest of the system. Thus, the reduced density coolant and vapor flow upward creating a pumping action. Using a heater for activation of the bubble pump allows cooldown and adsorption of the reactor to begin before the opposing reactor is heated to desorption temperature and pressure. This results in reduced total time for heatup and cooldown and an overall increase in the cooling power of the system. The same effect can also be achieved with a vapor pump in which a heater generates vapor in a tube of liquid heat transfer fluid or refrigerant and a check valve prevents backflow toward the system liquid reservoir, thus forcing coolant flow toward the adsorbing reactor heat transfer surface. With the check valve, the heater need not be in the vertical riser, orientation sensitivity is greatly reduced and less liquid head is required to feed the pump. Such a feature is illustrated in Fig. 3 (not embodying the invention) with heaters 47 and 49 positioned downstream from check valves 11 and 13' along the conduits from liquid reservoir 71.

The system illustrated in Fig. 1 may be sensitive to orientation, because the bubble pump vapor feed must be somewhat submerged below the liquid refrigerant level, whereas the inlet to the sorber heat exchange surface at the bubble pump exit must not be submerged. Such orientation sensitivity may be substantially reduced by connecting the bubble pump on a pivot or flexible connector as illustrated in Fig. 2. As shown, the bubble pump 15 is provided with a pair of flexible or pivoting connectors 19 and 29 along pipes 23 and 22, respectively, which allow the lower portion of the connected pipes, below the connectors, to hang vertically into receiver 27, below liquid level 99.

Fig. 4 illustrates a solid-vapor adsorption system of substantially the same design shown in Fig. 1, but incorporating an ejector for delivering cooling liquid to the adsorber reactor. In the system illustrated, ejectors 51 and 53, sometimes referred to as injectors, convert kinetic energy of the vapor refrigerant stream to a pressure head for pumping liquid refrigerant to a reactor. Advantages of ejectors over the bubble pump include reduced sensitivity to orientation by using a liquid reservoir 50, preferably having a conical or spherical bottom, or a tall cylindrical reservoir in which the ejectors are submerged at any desired inclination, more robust pumping, and delivery of liquid instead of two-phase mixture to the sorber to be cooled. A pivoting or flexible downcomer cooperating with the ejector at the bottom of the reservoir may also be used to further reduce orientation sensitivity.

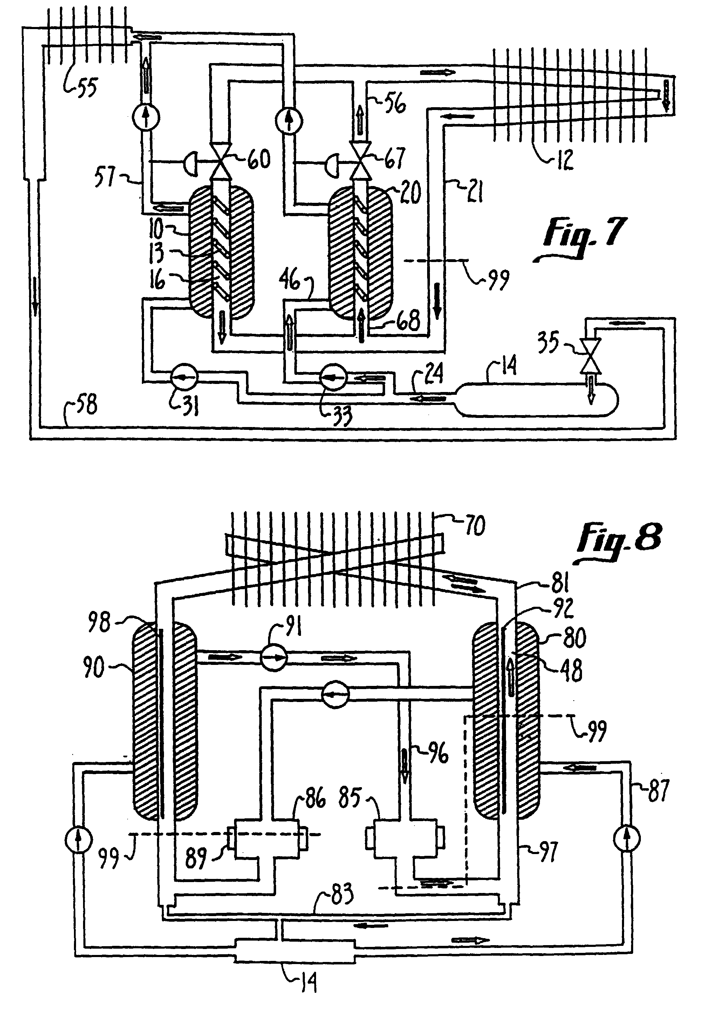

Figs. 5, 6 and 7 illustrate sorption systems using a phase change thermosyphon loop for cooling either sorber. The thermosyphon loop on the sorber being desorbed is deactivated by pressure generated inside the sorber. Deactivation is accomplished by forcing all of the liquid heat transfer fluid out of the thermosyphon loop. In Figs. 5 and 6, the system refrigerant is also the heat transfer fluid, while in Fig. 7, the system uses different refrigerant and heat transfer fluid compositions.

In Fig. 5, the schematic system shown is a pressure deactivated thermosyphon for transferring energy to the condenser. In the half-cycle illustrated, sorber 10 is desorbing with heater element 13 energized, and sorber 20 is adsorbing with its heater deenergized. Valves 63 and 66 are actively controlled. With valve 63 closed, the heat transfer tubes 16 in reactor 10 do not communicate with the condenser 12 whereby pressure generated by heat forces liquid refrigerant out of the heat transfer tube, through conduit 77, and into the heat transfer tubes of reactor 20. Initial pressure to deactivate the thermosyphon circuit is provided by the reactor heaters or by auxiliary heaters located in the thermosyphon loop which may be activated just long enough to increase vapor pressure in the loop sufficient to initiate deactivation. However, once desorption begins, pressure of the desorbed vapor maintains the circuit deactivated thereby minimizing heater energy consumed to maintain pressure in the heat transfer tube. With valve 66 open, the refrigerant may pass through the reactor 20 to the condenser and vaporization of liquid refrigerant in reactor 20 cools it to adsorption temperature whereby adsorption therein begins. Refrigerant vaporization then continues to remove heat of adsorption. Thus, open valve 66 activates a phase change thermosyphon heat transfer loop between reactor 20 and the condenser, while closed valve 63 deactivates the thermosyphon loop on the desorbing reactor 10 due to the pressure generated therein as previously described. At the end of the aforesaid half-cycle, the roles of the two sorbers are reversed, with heater in reactor 20 energized to start desorption, valve 66 is closed, the heater in reactor 10 is deenergized and valve 63 is opened. In both phases or half-cycles, refrigerant flow is controlled by valves 31, 33, 62 and 65. These valves may be one-way check valves, or may be actively operated. The actively operated or actuated valves 63 and 66 may be solenoid valves, sequenced with the same control circuits used to energize and deenergize the heaters. Alternatively, the actively controlled valves may be piston operated valves driven by air pressure or by refrigerant vapor pressure generated in the desorbing reactor.

Another variation of a pressure deactivated thermosyphon system is illustrated in Fig. 6. The system shown uses 3-way valves 72 and 73 controlled by pressure in the communicating sorber. Valves 72 and 73 are spring-operated, 3-port valves communicating between the respective sorbers and condenser 12. When the sorber pressure is less than or equal to the condenser pressure, valve plug 79 is urged to a position to close communication between the desorbing refrigerant outlet pipe and the condenser and to open the sorber heat transfer circuit to the condenser. Valve 73 is shown in that position. When a sorber is heated for desorption, the rising reactor pressure forces the valve plug in the opposite direction, closing heat transfer circuit communication with the condenser, and directing desorbing refrigerant to force liquid refrigerant from the reactor heat transfer tube 16 to reactor 20 heat transfer tube 17 via conduit 77. In the two systems illustrated in Figs. 5 and 6, the actuated valves which communicate between the respective reactors and the condenser are preferably operated so that direct communication between a reactor and the condenser is closed as soon as the heater in the desorbing reactor is energized. Such operation ensures that liquid refrigerant in a reactor heat transfer tube is not evaporated prior to the valve closing and forcing refrigerant from the tube. For this purpose, an electrically actuated valve which can be closed at precisely the desired time is preferred. The desirability of such timing is to minimize energy consumption. Observing again Fig. 5, with valve 63 closed before desorption pressure is reached in reactor 10, heating of the refrigerant in the heat transfer tube 16 will result in vapor pressure increase therein to force liquid refrigerant from the reactor heat transfer section, without assist from sorber pressure.

The apparatus shown in Figs. 5 and 6, may be modified for routing desorbed refrigerant vapor directly to the condenser, without passing through the reactor heat transfer section. Thus, for example, in Fig. 5, conduits 61 and 64 would communicate with conduit 59 above, or upstream from valves 63 and 66, respectively. One-way valves 62 and 65 could be replaced by using thermostatically operated valves with a sensor connected to the reactor heater for directing the desorbed refrigerant to condenser 12. Alternatively a solenoid valve could be used for the same purpose. The apparatus of Fig. 6 could be similarly modified.

In the embodiment illustrated in Fig. 7, the pressure deactivated thermosyphon system utilizes separate refrigerant and coolant (heat transfer fluid) condensers and associated fluid loops. Such system design may be preferred over the previously described systems using a single composition for both the cooling fluid and the system refrigerant and requiring only a single condenser , where it is desirable to minimize the refrigerant inventory, to allow use of a heat transfer fluid having improved heat transfer properties, or to allow the use of different pressures in the heat transfer components of the system. Examples of useful heat transfer fluids for such systems include water, alcohols, light hydrocarbons, heat transfer oils, and DOWTHERM® phase change heat transfer media.

In Fig. 7, valves 60 and 67 are closed to deactivate the thermosyphon of their respective sorbers during desorption. Thus, during the desorption half-cycle of reactor 10, with heater 13 activated, increased vapor pressure forces liquid coolant from the reactor heat transfer tube 16. Valves 60 and 67 may be operated electrically, thermostatically, or using pressure activation. As previously discussed, it is preferred that the valve communicating the desorbing reactor with the coolant condenser 12 be closed prior to energizing the desorption reaction heater in order to minimize heat losses through the vaporizing coolant. Electrically or thermostatically operated valves are preferred for such a purpose. Auxiliary heaters may be provided in the thermosyphon loop and energized just long enough to deactivate the loop until the pressure from desorption reactor heating creates sufficient vapor pressure to take over. In the system shown, a separate condenser 55 is used for condensing desorbed refrigerant vapor from a desorbing reactor. The condensed refrigerant is directed through conduit 58 and expansion valve 35 to evaporator 14, while condensed coolant is directed to the adsorbing reactor via conduit 21. Vaporized refrigerant is directed via conduit 24, valve 33 through conduit 46 to adsorbing reactor 20 in the half-cycle illustrated. Again, at the end of the described process, the functions of the two sorbers are reversed. The approximate coolant (heat transfer fluid) fill level 99 is also shown.

In Figs. 8, 9 and 10 sorption systems using a pressure activated thermosyphon are shown in which desorption pressure activates a heat transfer loop, in contrast to the pressure deactivated thermosyphon systems illustrated in Figs. 5 - 7. The pressure activated thermosyphons provide activation of heat transfer between sorbers, i.e., one sorber activates heat rejection in the other sorber. An advantage of such a system is the reduction or elimination of timing difficulties caused by heat transfer deactivation and elimination of the loss of heater energy due to refrigerant evaporation prior to deactivation of heat transfer loop.

The pressure activated thermosyphon system illustrated in Fig. 8 incorporates a reflux type condenser 70 for condensing the refrigerant which is also the coolant or heat transfer fluid. In the operation of the half-cycle shown, reactor 90 is desorbing with vaporized refrigerant directed therefrom through one-way valve 91 and conduit 96, through reservoir 85 and into the heat transfer surface of adsorbing reactor 80 via conduit 97. The pressure from the desorbing reactor and the desorbed refrigerant forces liquid refrigerant from reservoir 85 into the heat transfer surface 48 of reactor 80, where it vaporizes and cools the reactor for removing heat of absorption. Refrigerant vapor condensed in condenser 70 returns to reactor 80 for continuous cooling. Heating elements 92 and 98 are shown in the respective reactors, as is the liquid level 99 for the half-cycle illustrated. A capillary tube 83 or equivalent expansion device directs liquid refrigerant to evaporator 14 for expansion and direction to the adsorbing reactor via conduit 87.

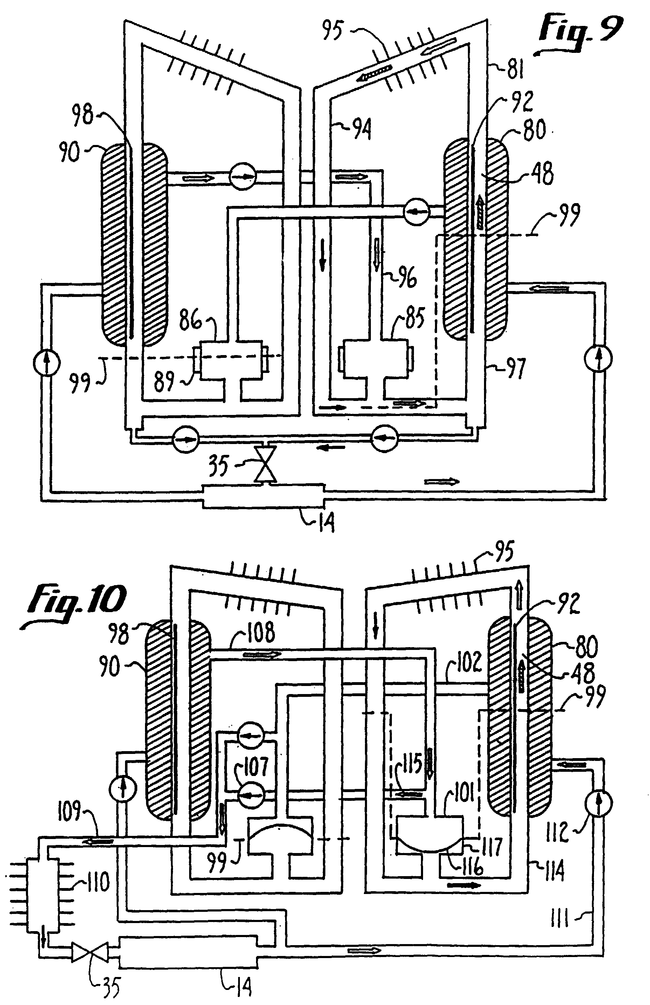

An alternative to a single reflux type condenser system shown in Fig. 8 may utilize separate return legs for condensed refrigerant and for providing a thermosyphon. Such an embodiment is illustrated in Fig. 9, with reactor 90 desorbing refrigerant, and reactor 80 adsorbing in the half-cycle shown. The liquid refrigerant directed into adsorbing reactor 80 is vaporized by heat transfer along the heat transfer surfaces of heat transfer section 48, with the vaporized refrigerant directed to condenser 95. The system illustrated in Fig. 8 may also incorporate check valves and a single expansion device for feeding evaporator 14, as shown in Fig. 9, to prevent fluid migration between sides.

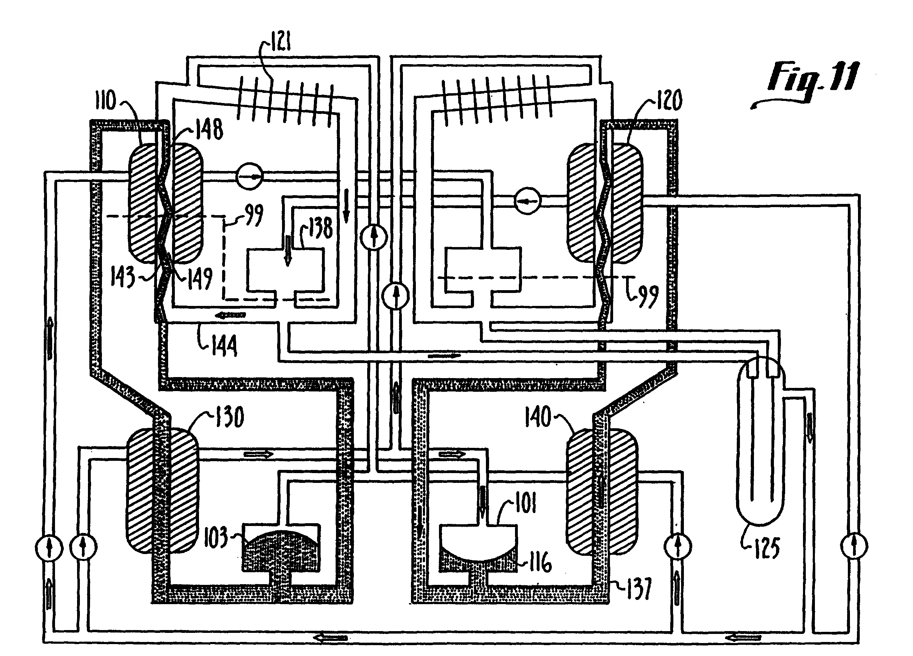

Yet another alternative is illustrated in Fig. 10 showing a system in which a coolant or heat transfer fluid other than the system refrigerant is used. In this embodiment, the pressure activated thermosyphon system incorporates diaphragms in the reservoirs which displace liquid coolant using pressure without mixing of the refrigerant and the coolant. In the half-cycle shown, using pressure from desorbing reactor 90, desorbed refrigerant is directed through conduit 108 into reservoir 101 where it forces diaphragm 116 to displace liquid coolant out of the lower cavity 117 and into adsorbing reactor 80 via conduit 114. Again, the vaporized liquid coolant is directed to the coolant condenser 95, and condensed liquid directed back to the reservoir 101. Refrigerant adsorbed in adsorbing reactor 80 is directed thereto from evaporator 14, and a portion of the desorbed refrigerant from reactor 90 is split off from conduit 108 via conduit 115 and one-way valve 107 and conduit 109 to refrigerant condenser 110. Other movable interface means may be substituted for the diaphragm shown. For example, bellows or pistons, etc., may be used at the liquid, gas interface for displacing liquid heat transfer fluid in response to gas pressure.

Pressure activated thermosyphon systems, with system refrigerant the same or different than coolant, may also be activated with a small heater in the coolant reservoir. Thus, small heaters 89 may be provided in reservoirs 85 and 86 of the systems shown in Figs. 8 and 9 to generate pressure and displace the coolant into the thermosyphon loop. The advantage of using such heaters is that cooldown and adsorption can start before desorption pressure is generated in the opposing reactor, with the effect of shortening total cooldown/heatup time and increasing net system cooling capacity. As previously described as an option to the bubble pump system of Fig. 1, a heater and desorbing vapor may also be combined to provide timing advantages while minimizing energy consumption; once desorption pressure is generated in the opposing reactor, the heater may be deactivated.

The heat rejection means comprising the thermosyphon loops or circuits for cooling adsorbing reactors may be used with staged systems such as those disclosed in U.S. Patent Nos. 5,079,928 and 5,263,330. In such discrete constant pressure staged systems, thermosyphon heat transfer loops may be provided between reactors of adjacent higher and lower staged reactors. For example, in a three stage system, three thermosyphon heat transfer loops may be used, one between the intermediate and highest stage reactors, one between the intermediate and lowest stage reactor, and one between the lowest stage reactor and the condenser. For higher stage reactors, the lower stage reactors serve the function of a "heatsink" or heat transfer fluid condenser, and the lowest stage reactor rejects heat to the condenser itself. These thermosyphon loops use phase change heat transfer fluids in the thermosyphon heat transfer loops and may be provided with dual-circuit heat transfer conduits as disclosed in aforesaid U.S. application 07/931,036. In such multiple stage reactor heat transfer circuits of three or more reactors, the lowest stage circuit may use the system refrigerant for heat transfer to the refrigerant condenser, or a different coolant and separate condenser. The higher stage reactors usually use a coolant different from the system refrigerant unless a low pressure refrigerant such as water is used.

In Fig. 11, a two-stage discrete constant pressure staging system is shown . It will be noted that the schematically illustrated system is similar in design to the systems illustrated in Figs. 7 and 8 incorporating pressure activated thermosyphon loops used on both stages. In the illustrated system, reactors 110 and 120 are the lower stage (cooler) reactors and reactors 130 and 140 are the higher stage (hotter) reactors. It will also be noted that the higher stage reactors 130 and 140 use a coolant other than the refrigerant whereas the lower stage reactors 110 and 120 use system refrigerant as the coolant for rejecting heat to the condenser 121. The lower stage sorbers may incorporate dual-circuit heat transfer section components such as illustrated and described in U.S. application serial no. 07/931,036. Alternatively, the heat transfer section 148 may be designed for heat transfer fluid condensation in a small tube 143 coiled inside of a larger tube 149 containing the heat rejection fluid, such as schematically illustrated in reactors 110 and 120.

The system illustrated in Fig. 11 shows a half-cycle with reactor 120 desorbing while reactor 140 is adsorbing refrigerant. In staged reactors 110 and 130, reactor 110 is adsorbing refrigerant while reactor 130 is desorbing. Desorbing reactor 130 directs refrigerant vapor to reservoir 101 expanding diaphragm 116 and displacing the liquid heat transfer fluid therein. The heat transfer fluid is shown stippled. The liquid heat transfer fluid is directed into adsorbing reactor 140, where it is vaporized, cooling the reactor. From there the vaporized heat transfer fluid is directed to lower stage desorbing reactor 120 and is condensed at the lower temperature conditions therein. The vaporized refrigerant desorbed in reactor 120 is directed through reservoir 138 and mixes with liquid condensed refrigerant in conduit 144. The mixture is then directed into reactor 110 by the activated thermosyphon loop created in heat transfer section 148 to provide heat transfer cooling. In the apparatus and system illustrated, refrigerant evaporator 125 provides vaporized refrigerant for adsorbing reactors. It should be understood that although a two-stage system is illustrated, any multiple stage system may be used to take advantage of the thermosyphon loop heat transfer advantages of the invention.

The system illustrated in Fig. 12 shows an example of the control of a heat rejection thermosyphon loop using refrigerant pressure across stages in contrast to the use of two sorbers in each stage as previously illustrated. Thus, in the discrete two-stage constant pressure system shown, refrigerant vapor from the second stage reactor 134 activates a heat rejection thermosyphon on first stage reactor 124 as adsorption occurs therein. Control of heat transfer fluid 131 shown stippled in the heat transfer pipe extending between the two reactors is accomplished using valve 129, which may be extemally activated, such as a solenoid valve. A heat source 127 provides heat input to the heat transfer fluid for driving the desorption reactions of the system. Cold fill levels 99 are shown for the system as is evaporator 122, expansion device 123 and refrigerant condensor 139. Refrigerant vapor from the second stage reactor 134 activates the heat rejection thermosyphon of first stage reactor 124, which may incorporate a heat transfer section for cooling the reactor as previously described for lower stage reactors in Fig 11. Activation may be pressure driven, as shown, or flow driven, i.e., bubble pump or ejector, or driven by a mechanical pump. Arrows illustrating liquid, gaseous and mixed phase refrigerant are not shown.

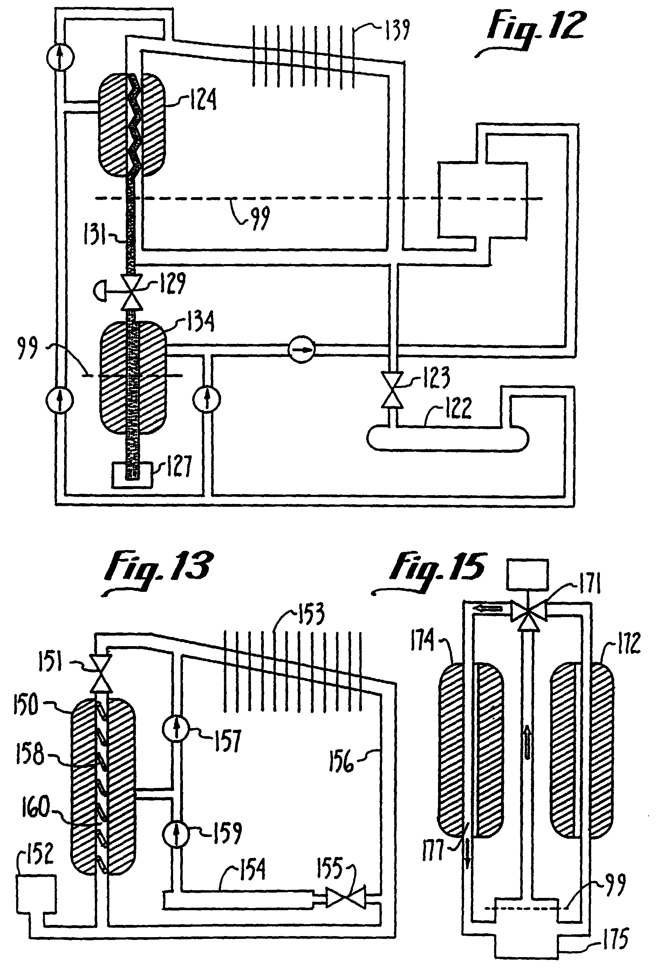

In Fig. 13 (not embodying the invention) a periodic refrigeration system is shown, which uses a single reactor or sorber. Such a periodic single stage system features a thermosyphon loop for cooling the reactor during adsorption with valve 151 open to complete the heat rejecting thermosyphon loop to the condensor 153 and conduit 156 back to heat transfer section 160 of the reactor. During adsorption, liquid refrigerant is vaporized in the reactor heat transfer section and with the valve 151 open, the thermosyphon loop is activated. During desorption, by closing valve 151 and energizing heater 158, the thermosyphon is deactivated, and increased vapor pressure in heat transfer section 160 of the reactor forces liquid refrigerant out of the heat transfer tubes and completely deactivates the thermosyphone to prevent heat rejection. The system incorporates a reservoir 152 for liquid refrigerant, one way valves 157 and 159, evaporator 154, and expansion device 155. The reservoir may include a heater which is activated for displacing refrigerant therefrom. Alternatively, the reservoir may be replaced by a mechanical pump, or a vapor pump, assisted with a heater, and/or a check valve for driving liquid into the system. Again, arrows illustrating different refrigerant phases are not shown.

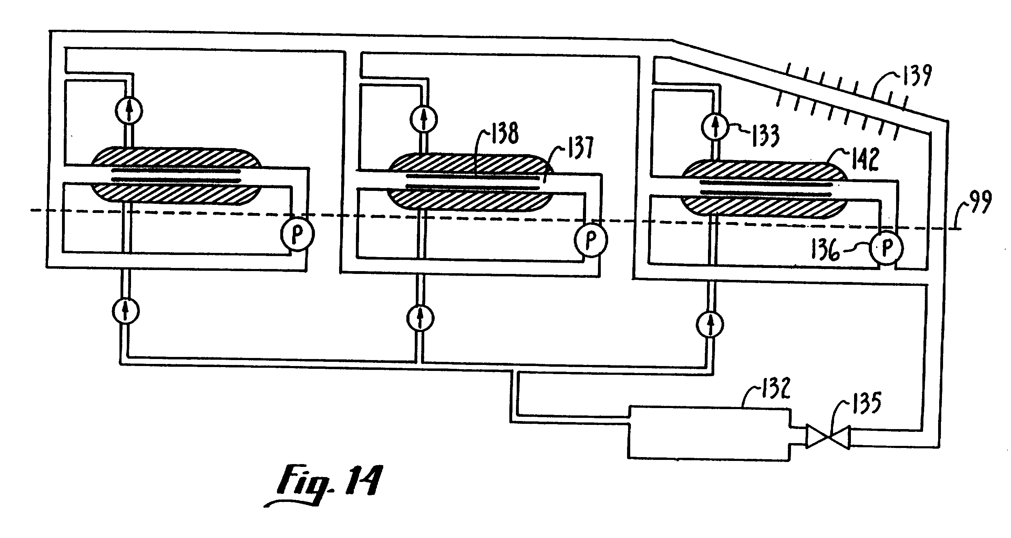

As disclosed herein thermosyphon loops for heat rejection are activated by pumping means such as bubble pump, vapor pump, ejector, or by fluid displacement. However, mechanical pumps may be used together with these means to activate phase-change thermosyphon systems for all of the above cycles by supplying a small amount of condensed coolant to the heat transfer surface. Such use of a mechanical pump may result in increased power density with proper cycle timing because heatup and cooldown can proceed simultaneously, and because adsorption and desorption periods need not be of equal duration as is required by desorption-driven pumping systems. Use of a mechanical pump also increases control options available. For example, when a thermostat indicates that cooling is no longer needed, the pump may be turned off and adsorption continued at a much lower rate to maintain load temperature without excessive cooling. Thermostatic demand for more cooling causes the pump to be activated and sorption rates would increase. During periods of low demand, desorption of the opposing sorber may also proceed without affecting performance of the adsorption, thus charging the system for the next call for cooling. In addition, three or more sorbers may be used to provide constant evaporator suction and reduce cycling losses due to refrigerant migration in the off periods or simply to provide backup or excess peak capacity. Such a system is illustrated in Fig. 14. Pumps 136 provide liquid refrigerant to heat transfer sections 137 of reactors 142. The system includes six check valves 133 along the gaseous refrigerant lines to and from the reactors, as shown. A condenser 139, evaporator 132, expansion valve 135 and reactor heaters 138 are also shown. The refrigerant phases within the system will be understood by reference to the systems illustrated in previous Figs.

In small or miniature solid-vapor sorption refrigerators, freezers and refrigeration systems using multiple sorbers, electrical resistive heating elements are often used because of convenience and reduced size requirements. Fig. 15, which does not embody the present invention shows an altemative apparatus design utilizing a single heat source and a single valve cooperating with heat transfer loops for controlling and directing the flow of heated vapor or a mixture of vapor and liquid phase heat transfer fluid to the sorbers at the desired time in the reaction cycle. The apparatus illustrated in Fig 15 shows only the heat input circuit, but it may be used with any of the sorber cooling systems described hereinabove. In the device shown, a single heat source, for example gas flame, solar concentrator, campfire, electric element, and the like, vaporizes a heat transfer fluid in boiler 175, with single valve 171 directing the vapor to either sorber 172 or 174, at the desired time. Condensation of the vapor in the sorber generates heat which may be transferred to the sorbent utilizing a dual circuit heat transfer system as previously described, or by condensing the vapor in a small condenser tube 177 in contact with the sorber heat transfer surface. Condenser tube 177 may be straight as illustrated and bonded to one side of the heat transfer surface, or it may be coiled or concentric relative to the cooling channel of the heat transfer surface with axial fins connecting to the sorber as is commonly used in double-wall heat exchangers. In the device illustrated, vaporized heat transfer fluid from boiler 175 is directed to valve 171, which is positioned to direct the vapor to reactor 174, where it is condensed thereby releasing heat to drive desorption in the reactor. The condition of valve 171 is closed relative to reactor 172, in the adsorbing stage, and which may be cooled as previously described hereinabove. Such a means for heating may be used as an alternative to the conventional use of resistive electrical heating for small or miniaturized sorption refrigerators or refrigeration systems.

The systems of the invention disclosed herein are advantageous over prior art systems requiring the use of solenoid and/or thermostatically controlled components for operating and controlling the cooling loops for cooling adsorbing reactors. Instead, the systems of the present invention use vapor pressure displacement of the heat transfer fluid to activate the heat rejection loop. Moreover, systems of the present invention offer the advantage of using the system refrigerant as the heat transfer fluid in the thermosyphon cooling loop. The systems described herein may be used in any solid-vapor sorption refrigeration systems and applications. The invention finds particular advantage for small or miniature refrigeration engines, for example 5 to 25 watts cooling capacity, such as personal refrigerators and freezers, having few moving parts, and manufactured at relatively low cost. Because of the improvements and advantages of systems incorporating the apparatus and methods of the present invention, refrigerators, freezers, coolers and other appliances may incorporate and benefit from such inventions when incorporating such features of the invention, the resulting appliances will have substantially improved capacity including particularly noiseless and vibrationless operation while benefiting from reliable, simple, and inexpensive components, again due to the substantial reduction in the valves, pumps, and other power consuming components which are typically required in presently commercially available refrigerators, freezers, etc. More specifically, devices and appliances incorporating the components , methods and advantages of the present invention include small capacity refrigerators of between about 5 watts and 50 watts, and small capacity freezers of between about 5 watts and about 100 watts, having extreme temperature lifts. High specific power density low wattage cooling appliances of up to about 300 watts capacity may be constructed of components incorporating the present invention. Such small or personal refrigerator cooling around 0°C to about 8°C and freezers cooling at between about minus 30 and minus 10°C, and typically up to about 7 cubic feet are examples of such appliances. Other specific examples include high power, rapid freezing devices, such as disclosed in U.S. Patent 5,161,389 or similar devices such as ice cream makers, ice cube makers, medical freezers and the like. Yet other cooling devices include air conditioning equipment, especially small room air conditioners of less than about 1.5 ton capacity or automotive or personal cooling devices, and the like. Other cooling apparatus which may be designed to incorporate the advantageous components and methods of the present invention include the electronic cooling systems disclosed in U.S. patent no. 5,271,239. A list of specific types and examples of apparatus and appliances include:
consumer leisure appliances, up to about 70 watts capacity, such as small or portable or personal freezers, refrigerators or refrigerator/freezer combination units, refrigerator, freezer or combination appliances which may be installed in recreational vehicles, boats, automobiles or trucks, and mini-bar refrigerators, freezers or combination units;
kitchen appliances, up to about 400 watts, such as rapid freezers, standing alone or combined with microwave and/or standard refrigerator/freezer units, iced tea/coffee makers, ice cube makers, ice cream makers, freeze dryer units, and drink or water coolers;
display and vending equipment and apparatus, up to about 500 watts, such as coolers, freezers and ice makers;
durable good appliances, up to about 400 watts such as household refrigerators and freezers and commercial freezers and refrigerators, with or without rapid freeze capability, and dehumidifiers;
building air conditioning appliances including residential split unit air conditioners and heat pumps (1RT to 5RT), light commercial split unit air conditioners and heat pumps (5RT to 20RT), room air conditioners (1/2 RT to 1-1/2 RT) and residential dehumidifiers;
air conditioning and cooling systems for personal autos, vans or trucks, or for commercial vehicles such as buses, trains, aircraft, or pleasure or commercial boats and ships, including vehicle AC systems (1RT to 2RT), vehicle thermal storage systems (500 to 1000 w-hrs) and vehicular seat or bench cooling systems;
electronic cooling apparatus, up to about 200 watts, for electronic and chip cooling and electronics system box air conditioning;
miscellaneous equipment and appliances such as HVAC products in excess of 20RT capacity, medical and laboratory appliances, military products including combat, pilot and astronaut suits, industrial and commercial heat pumps, boilers, thermal energy storage equipment, gas turbines, commercial dehumidifiers, aerospace cooling and refrigeration equipment, etc.

The above list is not intended to be exhaustive, but rather to give representative examples of specific types of apparatus that may incorporate the apparatus and methods of the present invention. These as well as other systems may incorporate the advantages and components of the present invention.

## Claims

1. A method of cooling an adsorbing reactor (20) in a sorption reaction system comprising reactors (10, 20) containing a solid adsorbent on which a gaseous refrigerant is altemately adsorbed and desorbed, a condenser (12) for condensing vaporized heat transfer fluid or gaseous reactant and a cooling loop (22, 21) communicating with a heat transfer section (17) of each of said reactors for directing heat transfer fluid or refrigerant to and from said reactors, the method comprising directing liquid phase heat transfer fluid or liquid refrigerant (99), in which a phase change from liquid to gas occurs at a temperature at or below the temperature of adsorption, to said adsorbing reactor in heat exchange exposure to the adsorbent therein, said cooling loop having a first cooling loop portion (21) downstream from said condenser for directing liquid heat transfer fluid or refrigerant condensed in said condenser to said reactor heat transfer section, and characterised by having a second cooling loop portion (23) communicating with said first cooling loop portion at a junction (15) downstream from said condenser for directing vaporized heat transfer fluid or gaseous reactant from a desorbing reactor to said downstream junction, whereat the pressure of said vaporized heat transfer fluid or gaseous refrigerant drives said liquid heat transfer fluid or liquid refrigerant flowing in said cooling loop from said downstream junction to the adsorbing reactor.

2. The method of Claim 1 including vaporizing heat transfer fluid by heating said liquid heat transfer fluid in said cooling loop.

3. The method of Claim 2 including providing one-way valve means (11, 13) along said cooling loop to prevent back flow of liquid heat transfer fluid therein.

4. The method of Claim 1 wherein said cooling loop includes a generally vertical conduit (22) and wherein liquid heat transfer fluid is driven upwardly along said generally vertical conduit to the adsorbing reactor by said vaporized heat transfer fluid.

5. The method of Claim 4 including heating said liquid heat transfer fluid in said generally vertical conduit (22).

6. The method of Claim 1 wherein said heat transfer fluid comprises said refrigerant and wherein desorbed gaseous refrigerant is directed to said cooling loop from a desorbing reactor for driving liquid refrigerant to said adsorbing reactor.

7. The method of Claim 1 wherein said liquid heat transfer fluid or liquid refrigerant is vaporized in the heat transfer section (17) of an adsorbing reactor and directed to said condenser (12), and a portion of condensed heat transfer fluid or condensed refrigerant is directed to said cooling loop.

8. The method of Claim 1 comprising utilizing an ejector pump (51, 53) for directing said liquid heat transfer fluid or liquid refrigerant in said cooling loop.

9. The method of Claim 8 wherein said ejector pump (51, 53) is driven by a combination of refrigerant vapor generated by a heater and said desorbed gaseous refrigerant.

10. The method of Claim 1 comprising utilizing a bubble pump (15) for directing said liquid heat transfer fluid or liquid refrigerant in said cooling loop.

11. The method of Claim 10 wherein said bubble pump is driven by a combination of refrigerant vapor generated by a heater (47, 49) and said desorbed gaseous refrigerant.

12. The method of Claim 8 comprising utilizing an ejector pump (51, 53) driven by vapor from said vaporized heat transfer fluid.

13. The method of Claim 1 utilizing mechanical pump means (136) to assist driving liquid heat transfer fluid or liquid refrigerant in said cooling loop.

14. The method of Claim 1 wherein said reactors contain a complex compound formed by adsorbing a polar gaseous refrigerant on a metal salt comprising a halide, nitrate, nitrite, oxalate, sulfate, or sulfite of an alkali metal, alkaline earth metal, transition metal, zinc, cadmium, tin, aluminum, sodium boroflouride, or double metal chloride, in a process for increasing chemisorption reaction rates between the gaseous refrigerant and complex compound by restricting the volumetric expansion of the complex compound formed during at least the initial adsorption reaction to form a reaction product mass capable of increased chemisorption reaction rates as compared to a complex compound formed without restricting said volumetric expansion.

15. The method of Claim 14 wherein said polar gaseous refrigerant is ammonia and said metal salt comprises SrCl₂, SrBr₂, CaCl₂, CaBr₂, Cal₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂, or CrCl₂ or mixtures thereof.

16. The method of Claim 1 or 14 wherein said system includes said condenser (12) for condensing said refrigerant fluid and one or more conduits (21, 44, 52, 68) for directing condensed refrigerant from said condenser to said cooling loop, said method including directing desorbed gaseous refrigerant from a reactor to said condenser, condensing said refrigerant, and directing a portion of said condensed refrigerant to said cooling loop.

17. The method of Claim 16 wherein said system includes a refrigerant evaporator (14), said method including directing a portion of said condensed refrigerant from said condenser to said evaporator.

18. The method of Claims 1 or 14 wherein said system includes a first condenser (55) for condensing gaseous refrigerant and a second condenser (12) for condensing heat transfer fluid, said method including directing condensed heat transfer fluid from said second condenser to said cooling loop, and pressurizing said cooling loop with gaseous refrigerant for forcing liquid heat transfer fluid to an adsorbing reactor.

19. A method according to Claim 1, in which the sorption reaction system comprises one or more first such reactors (10, 20) in which a refrigerant is alternately adsorbed and desorbed, and one or more second such reactors (20,10) in which said refrigerant is alternately desorbed and adsorbed, each reactor having a condenser (12) for condensing vaporized heat transfer fluid, the cooling loop being a thermosyphon loop (77) communicating the heat transfer section (17) of said first reactor with the heat transfer section (16) of the second reactor or, in the case of multiple first and second reactors, each of said first reactors with the heat transfer section (16) of a different one of said second reactors, the method comprising directing the liquid phase heat transfer fluid to the one or more adsorbing reactor heat transfer sections during the adsorption reaction therein, wherein vaporized heat transfer fluid displaces liquid heat transfer fluid in said thermosyphon loop for directing said liquid heat transfer fluid therein to said one or more adsorbing reactors.

20. The method of Claim 19 wherein said heat transfer fluid comprises said refrigerant, said method including deactivating the thermosyphon loop (77) in said desorbing reactor by directing pressurized desorbed gaseous refrigerant from said desorbing reactor through the heat transfer section of said desorbing reactor, and forcing liquid refrigerant from said heat transfer section with said desorbed gaseous refrigerant.

21. The method of Claim 20 wherein the desorbed gaseous refrigerant is pressurized by heating said desorbing reactor with first heating means (13) for driving the desorption reaction.

22. The method of Claim 21 comprising energizing said first heating means (13) for displacing liquid refrigerant from said heat transfer section, and thereafter for creating pressure in said thermosyphon loop from the desorbed gaseous refrigerant.

23. The method of Claim 20 wherein said thermosyphon loop includes first and second conduits (59) communicating between said condenser (12) and said first and second reactors (10, 20), respectively, each of said first and second conduits including a valve (63, 66, 72, 74) operated for opening and closing said first and second conduits, said method including closing the valve communicating a desorbing reactor with the condenser during the desorption reaction whereby desorbed gaseous refrigerant is directed through said heat transfer (16) section of said desorbing reactor (10) for forcing said liquid refrigerant therefrom.

24. The method of Claim 23 wherein said valve (72, 74) is operated by refrigerant vapor pressure from a desorbing reactor for closing the conduit communicating said desorbing reactor and the condenser.

25. The method of Claim 21 wherein said system includes second heating means (89) for heating refrigerant in said thermosyphon loop, said method including energizing said second heating means to increase vapor pressure for deactivating said thermosyphon loop in a desorbing reactor until said first heating means creates sufficient desorbed refrigerant vapor pressure for deactivating said thermosyphon.

26. The method of Claim 19 wherein the heat transfer fluid is pressurized by heating said desorbing reactor with first heating means (13) for driving the desorption reaction.

27. The method of Claim 19 wherein said thermosyphon loop includes first and second conduits (21, 56) communicating between said condenser (12) and said first and second reactors, respectively, each of said first and second conduits including a valve (60, 67) operated for opening and closing said first and second conduits, said method including closing the valve (60) communicating a desorbing reactor (10) with the condenser during the desorption reaction whereby vaporized heat transfer fluid is directed through said heat transfer section (16) of said desorbing reactor for forcing said liquid heat transfer fluid therefrom.

28. The method of Claim 27 wherein said valve (60) is operated by refrigerant vapor pressure from a desorbing reactor for closing the conduit communicating said desorbing reactor and the condenser (12).

29. The method of Claim 26 wherein said system includes second heating means (89) for heating vaporized heat transfer fluid in said thermosyphon loop, said method including energizing said second heating means to increase vapor pressure for deactivating said thermosyphon loop in a desorbing reactor until said first heating means creates sufficient vapor pressure for deactivating said thermosyphon.

30. The method of Claim 19 wherein said heat transfer fluid comprises said refrigerant, said method including activating the thermosyphon loop comprising utilizing pressurized refrigerant vapor for forcing liquid refrigerant in said thermosyphon loop to an adsorbing reactor.

31. The method of Claim 30 comprising utilizing desorbed gaseous refrigerant from a desorbing reactor for forcing liquid refrigerant in said thermosyphon loop.

32. The method of Claim 31 wherein said system further includes a reservoir (85,86) for receiving liquid refrigerant and a further heater (89) co-operating therewith, said reservoir communicating with a conduit (96) for directing desorbed gaseous refrigerant from a reactor (90) and with said thermosyphon loop, said method including energizing said heater for pressurizing refrigerant vapor in said reservoir and displacing liquid refrigerant therefrom into said thermosyphon loop.

33. The method of Claim 32 comprising energizing said further heater prior to desorbing gaseous refrigerant in said desorbing reactor.

34. The method of Claim 20 wherein said system further includes a reservoir (85,86) for receiving liquid refrigerant and a further heater (89) co-operating therewith, said method including energizing said heater for pressurizing refrigerant vapor in said reservoir and displacing liquid refrigerant therefrom into said thermosyphon loop.

35. The method of Claim 30 wherein said system further includes a reservoir (85,86) for receiving condensed refrigerant, and a further heater (89) in said thermosyphon loop, said method including energizing said heater for vaporizing liquid refrigerant thereby forcing liquid refrigerant in said thermosyphon loop to an adsorbing reactor.

36. The method of Claim 19 wherein said refrigerant and said heat transfer fluid comprise different compositions and wherein said system includes first conduits (102, 108, 109, 111) for directing refrigerant to and from said reactors and second conduits (114) for directing heat transfer fluid therein, and movable interface (116) means cooperating with said first and second conduits for forcing heat transfer fluid into said thermosyphon loop in response to refrigerant vapor pressure on said movable interface means, said method including generating sufficient refrigerant vapor pressure from a desorbing reactor to activate said thermosyphon loop.

37. The method of Claim 36 wherein said movable interface means includes a reservoir (117) for receiving liquid heat transfer fluid and a heater co-operating therewith, said method including energizing said heater for pressurizing refrigerant vapor on one side of said movable interface means thereby moving said interface means for displacing liquid heat transfer fluid from said reservoir into said thermosyphon loop.

38. The method of Claim 19 wherein said refrigerant and said heat transfer fluid comprise different compositions, said system including first conduits for directing refrigerant to and from said reactors and second conduits for directing heat transfer fluid therein, and a reservoir for receiving liquid heat transfer fluid and co-operating with said first and second conduits for forcing heat transfer fluid into said thermosyphon loop, said method including additionally heating said reservoir for displacing liquid heat transfer fluid therefrom into said thermosyphon loop.

39. The method of Claim 19 wherein said first and second reactors contain a complex compound formed by adsorbing a polar gaseous refrigerant on a metal salt comprising a halide, nitrate, nitrite, oxalate, sulfate, or sulfite of an alkali metal, alkaline earth metal, transition metal, zinc, cadmium, tin, aluminum, sodium boroflouride, or double metal chloride, said method including a process for increasing chemisorption reaction rates between the polar gaseous refrigerant and the complex compound comprising restricting the volumetric expansion of the complex compound formed during at least the initial adsorption reaction to form a product capable of increased chemisorption reaction rates as compared to a complex compound formed without restricting said volumetric expansion.

40. The method of Claim 39 wherein said polar gaseous refrigerant is ammonia and said metal salt comprises SrCl₂, SrBr₂, CaCl₂, CaBr₂, Cal₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂, or CrCl₂ or mixtures thereof.

41. A method according to Claim 1, in which the solid adsorbent is a complex compound formed by adsorbing a polar gaseous refrigerant on a metal salt comprising a halide, nitrate, nitrite, oxalate, sulfate, or sulfite of an alkali metal, alkaline earth metal, transition metal, zinc, cadmium, tin, aluminum, sodium boroflouride, or double metal chloride, wherein said complex compound is formed by a method of increasing the chemisorption reaction rates between the polar refrigerant and the complex compound comprising restricting the volumetric expansion of the complex compound formed during at least the initial adsorption reaction to form a product capable of increased chemisorption reaction rates as compared to a complex compound formed without restricting said volumetric expansion, in which the cooling loop comprises conduit means for directing the heat transfer fluid from one or more of said reactors to a condenser (12) and from said condenser to said one or more reactors, the method comprising providing vapor pressure for displacing said heat transfer fluid in said conduit means between said condenser and said reactor thereby directing liquid heat transfer fluid to said adsorbing reactor, and vaporizing at least a portion of said liquid heat transfer fluid in said adsorbing reactor and utilising said vaporized heat transfer fluid for driving said liquid heat transfer fluid to said adsorbing reactor.

42. The method of Claim 41 wherein said polar gaseous refrigerant is ammonia and said metal salt comprises SrCl₂, SrBr₂, CaCl₂, CaBr₂, Cal₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂, or CrCl₂ or mixtures thereof.

43. The method of Claim 41 wherein said system comprises a plurality of reactors (110, 120, 130, 140) and each reactor contains a different complex compound therein, said method including directing at least a portion of the heat from an exothermic adsorption reactor to a endothermic desorption reactor for driving the reaction therein.

44. The method of Claim 43 wherein said reaction system comprises three or more reactors, each reactor containing a different complex compound therein, each of said different complex compounds having a different gaseous vapor pressure substantially independent of the concentration of gaseous reactant, said method including directing heat transfer fluid between reactors containing the next successive higher and next successive lower vapor pressure reaction products.

45. A sorption reaction system apparatus comprising: a plurality of reactors (10, 20) containing a solid adsorbent for alternately adsorbing and desorbing a refrigerant thereon, said reactors including reactor heat exchange means (16, 17) for directing a heat transfer fluid in heat exchange exposure to said adsorbent; means (13, 36) for heating said first and second reactors; condenser means (12); evaporator means (14); a heat rejection means (22, 21, 41) communicating with said reactor heat exchange means of each of the reactors for rejecting heat during adsorption therein, the heat rejection means comprising a first conduit (41) for directing vaporized heat transfer fluid from an adsorbing reactor to said condenser means, and a second conduit (21, 22) downstream from said condenser for directing condensed heat transfer fluid from said condenser means to an adsorbing reactor; the apparatus further comprising a heat transfer fluid located in said heat rejection means capable of a phase change from liquid to gas at a temperature at or below the temperature of adsorption in an adsorbing reactor, characterised by vapor operated fluid displacement means comprising one or more gas pressure conduits (23) communicating a desorbing reactor with said second conduit (22) of the heat rejection means at a junction (15) downstream from said condenser for forcing liquid phase heat transfer fluid passing said junction to an adsorbing reactor heat exchange means with desorbed gaseous refrigerant or vaporized heat transfer fluid.

46. The apparatus of Claim 45 wherein said heat transfer fluid is the same composition as said refrigerant.

47. The apparatus of Claim 45 wherein said fluid displacement means comprises a gas operated pump (51, 53) driven by pressure from vaporized heat transfer fluid or gaseous refrigerant.

48. The apparatus of Claim 47 wherein said pump comprises a bubble pump (15) having a generally vertical pipe (22) containing liquid phase heat transfer fluid communicating with said reactor heat exchange means (17) and with said one or more gas pressure conduits (23) for directing vaporized heat transfer fluid or desorbed gaseous refrigerant to drive said liquid phase heat exchange fluid along said vertical pipe.

49. The apparatus of Claim 46 wherein said fluid displacement means comprises a reservoir (50) for holding liquid heat transfer fluid and includes one or more ejectors (51, 53) for pumping liquid refrigerant from said reservoir to said reactors.

50. The apparatus of Claim 45 wherein said fluid displacement means further comprises a further heater (47, 49) co-operating with said second conduit of said heat rejection means for heating and vaporizing liquid heat transfer fluid or refrigerant therein for driving liquid heat transfer fluid or liquid refrigerant to reactor heat exchange means for cooling an adsorbing reactor.

51. The apparatus of Claim 50 including first one-way valves (37) for preventing back flow of heated liquid heat transfer fluid or refrigerant along said second conduit of said heat rejection means.

52. The apparatus of Claim 45 including passageway means (61, 64) for directing desorbed gaseous refrigerant from said solid adsorbent to said reactor heat exchange means.

53. The apparatus of Claim 52 including a selectively operated valve (63, 66) co-operating with said passageway means and said first conduit of said heat rejection means for selectively directing desorbed gaseous refrigerant to said reactor heat exchange means during reactor desorption, and selectively directing vaporized refrigerant from a reactor to a condenser during reactor adsorption.

54. The apparatus of Claim 52 including pressure operated valves (72, 74) co-operating with said first portion of said heat rejection means and said passageway means and responsive to desorbed refrigerant pressure for closing during reactor desorption thereby directing desorbed gaseous refrigerant to said reactor heat exchange means during reactor desorption, and for opening during reactor adsorption thereby directing vaporized refrigerant from a reactor to a condenser.

55. The apparatus of Claim 45 wherein said condenser means comprises first and second condensers, said first condenser (12) communicating with said heat rejection conduit loop for condensing said heat transfer fluid, and said second condenser (65) communicating with a gas pressure conduit for condensing desorbed refrigerant.

56. The apparatus of Claim 55 including selectively operated valve means (60, 67) co-operating with said heat rejection conduit loop for selectively directing vaporized heat transfer fluid from a reactor to said first condenser (12) during reactor adsorption and for pressurising said loop with vaporized heat transfer fluid from a desorbing reactor heat exchange means during reactor desorption.

57. The apparatus of Claim 45 wherein said fluid displacement means comprises a movable interface means (116) responsive to vapor pressure on a first side thereof for displacing liquid on the second side thereof.

58. The apparatus of Claim 57 wherein said fluid displacement means includes a reservoir (101) co-operating with said movable interface means.

59. The apparatus of Claim 58, wherein said reservoir communicates with said one or more gas pressure conduits (102, 108) for receiving desorbed gaseous refrigerant therein, and with said condenser for receiving heat transfer fluid.

60. The apparatus of Claim 58 wherein said movable interface means (116) comprises a diaphragm positioned in said reservoir.

61. The apparatus of Claim 45, wherein said fluid displacement means comprises one or more reservoirs (85, 86) for holding liquid heat transfer fluid and communicating with said reactors via said second conduit of said heat rejection means, and wherein said one or more gas pressure conduits receive desorbed gaseous refrigerant from a desorbing reactor.

62. The apparatus of Claim 61 wherein said one or more reservoirs further includes a further heater (89) co-operating therewith for heating and vaporizing refrigerant for displacing liquid heat transfer fluid from said reservoir to said reactor heat exchange means.

63. The apparatus of Claim 45 wherein each of said reactors contain a different solid adsorbent therein, each solid adsorbent comprising a reaction product between a solid reactant and a gaseous reactant adsorbed thereon, each of said different reaction products having a different gaseous reactant vapor pressure, substantially independent of the concentration of gaseous reactant.

64. The apparatus of Claim 63 comprising a plurality of three or more reactors (110, 120, 130, 140), said different reaction products therein having an ascending order of gaseous reactant vapor pressure with the adsorbing temperature of a lower vapor pressure reaction product at a low reaction pressure being higher than the desorption temperature of the next successive higher vapor pressure reaction product at a high reaction pressure, and including means for directing heat transfer fluid between said reactors for rejecting heat of adsorption from the highest temperature reactor to the next lower temperature reactor.

65. The apparatus of Claim 45 including a single heating source (175) for vaporizing liquid heat transfer fluid, a three-way valve (171) for selectively directing vaporized heat transfer fluid to said reactors, respectively, and conduit means communicating between said single heat source and said three-way valve member for directing vaporized refrigerant from said heat source to said valve.

66. The apparatus of Claim 65 wherein said reactors include a heat transfer section (171) in heat transfer communication with said solid adsorbent for condensing said vaporized heat transfer fluid.

67. The apparatus of Claim 45 wherein said reactors contain a complex compound formed by adsorbing a polar gaseous refrigerant on a metal salt comprising a halide, nitrate, nitrite, oxalate, sulfate, or sulfite of an alkali metal, alkaline earth metal, transition metal, zinc, cadmium, tin, aluminum, sodium boroflouride, or double metal chloride, and formed by a method for increasing adsorption and desorption reaction rates by restricting the volumetric expansion of the complex compound during at least the initial adsorption reaction.

68. The apparatus of Claim 67 wherein said polar gaseous refrigerant is ammonia and said metal salt comprises SrCl₂, SrBr₂, CaCl₂, CaBr₂, Cal₂ CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ or CrCl₂ or mixtures thereof.

69. The apparatus of Claim 68 wherein said heat transfer fluid comprises said ammonia refrigerant.

70. The apparatus of Claim 62 wherein said heat transfer fluid comprises said refrigerant, and wherein said condenser communicates with said heat rejection means and said one or more reservoirs for supplying condensed refrigerant thereto.

71. The apparatus of Claims 63 or 64 wherein heat of adsorption in a lower stage, cooler temperature reactor (110, 120) is rejected by condensed refrigerant in said reactor heat exchange means, and heat of adsorption in a higher stage, hotter temperature reactor (130, 140) is rejected by liquid heat transfer fluid in said reactor heat exchange means, and wherein said heat rejection loop includes one or more refrigerant conduits (144) co-operating with said reactor heat exchange means for circulating refrigerant from the cooler temperature reactor heat exchange means to said condenser and back to said cooler temperature reactor heat exchange means, and one or more heat transfer fluid conduits (137) for directing heat transfer fluid between the heat exchange means of a higher temperature reactor and a lower temperature reactor.

## Patentansprüche

1. Verfahren zum Kühlen eines Adsorptionsreaktors (20) in einem Sorptionsreaktionssystem mit
Reaktoren mit einem festen Adsorbens, auf dem ein gasförmiges Kühlmittel abwechselnd adsorbiert und desorbiert wird,
einer Kondensationseinrichtung (12) zum Kondensieren von verdampfter Wärmeübertragungsflüssigkeit oder eines gasförmigen Verbrennungshilfsstoffes und einer Kühlschleife (22, 21), die mit einem Wärmeübertragungsabschnitt (17) jedes der Reaktoren in Verbindung steht, um die Wärmeübertragungsflüssigkeit oder das Kühlmittel zu und von den Reaktoren zu leiten,
gekennzeichnet durch die Schritte Leiten einer Wärmeübertragungsflüssigkeit in der flüssigen Phase oder eines flüssigen Kühlmittels (99) in einer Wärmeaustauschpreisgabe zum Adsorptionsreaktor mit dem darin befindlichen Adsorbens, wobei dabei ein Phasenwechsel von einer Flüssigkeit zu einem Gas bei einer Temperatur gleich oder unter der Adsorptionstemperatur auftritt,
wobei die Kühlschleife einen ersten Kühlschleifenteil (21) strömungsabwärts von der Kondensationseinrichtung zum Leiten der in der Kondensationseinrichtung kondensierten flüssigen Wärmeübertragungsflüssigkeit oder des Kühlmittels zu dem Reaktorwärmeübertragungsabschnitt aufweist,
wobei ein zweiter Kühlschleifenteil (23) an einer Verbindung (15) strömungsabwärts von der Kondensationseinrichtung mit dem ersten Kühlschleifenteil in Verbindung steht, um verdampfte Wärmeübertragungsflüssigkeit oder einen gasförmigen Verbrennungshilfsstoff von einem Desorptionsreaktor zu der strömungsabwärts liegenden Verbindung zu leiten, an der der Druck der verdampften Wärmeübertragungsflüssigkeit oder des gasförmigen Kühlmittels die in der Kühlschleife fließende flüssige Wärmeübertragungsflüssigkeit oder das flüssige Kühlmittel von der strömungsabwärts liegenden Verbindung zum Adsorptionsreaktor treibt.

2. Verfahren nach Anspruch 1, gekennzeichnet durch den weiteren Schritt
Verdampfen der Wärmeübertragungsflüssigkeit durch Erhitzen der flüssigen Wärmeübertragungsflüssigkeit in der Kühlschleife.

3. Verfahren nach Anspruch 2, gekennzeichnet durch den weiteren Schritt
Ausbilden einer Einweg-Ventileinrichtung (11, 13) entlang der Kühlschleife zum Verhindern eines Rückflusses der flüssigen Wärmeübertragungsflüssigkeit.

4. Verfahren nach Anspruch 1, dadurch gekennzeichnet, daß
die Kühlschleife eine im allgemeinen vertikale Leitung (22) enthält und
die flüssige Wärmeübertragungsflüssigkeit durch die verdampfte Wärmeübertragungsflüssigkeit aufwärts entlang der im allgemeinen vertikalen Leitung zum Adsorptionsreaktor getrieben wird.

5. Verfahren nach Anspruch 4, gekennzeichnet durch den weiteren Schritt
Erhitzen der flüssigen Wärmeübertragungsflüssigkeit in der im allgemeinen vertikalen Leitung (22).

6. Verfahren nach Anspruch 1, dadurch gekennzeichnet, daß die Wärmeübertragungsflüssigkeit das Kühlmittel umfaßt und desorbiertes gasförmiges Kühlmittel zum Treiben des flüssigen Kühlmittels zum Adsorptionsreaktor von einem Desorptionsreaktor zu der Kühlschleife geleitet wird.

7. Verfahren nach Anspruch 1, dadurch gekennzeichnet, daß die flüssige Wärmeübertragungsflüssigkeit oder das flüssige Kühlmittel in dem Wärmeübertragungsabschnitt (17) eines Adsorptionsreaktors verdampft und zu der Kondensationseinrichtung (12) geleitet wird, und ein Teil der kondensierten Wärmeübertragungsflüssigkeit oder des kondensierten Kühlmittels zu der Kühlschleife geleitet wird.

8. Verfahren nach Anspruch 1, gekennzeichnet durch den weiteren Schritt
Verwenden einer Ausstoßpumpe (51, 53) zum Leiten der flüssigen Wärmeübertragungsflüssigkeit oder des flüssigen Kühlmittels in der Kühlschleife.

9. Verfahren nach Anspruch 8, dadurch gekennzeichnet, daß die Ausstoßpumpe (51, 53) durch eine Kombination aus einem durch eine Heizeinrichtung erzeugten Kühlmitteldampf und dem desorbierten gasförmigen Kühlmittel angetrieben wird.

10. Verfahren nach Anspruch 1, gekennzeichnet durch den weiteren Schritt
Verwenden einer Blasenpumpe (15) zum Leiten der flüssigen Wärmeübertragungsflüssigkeit oder des flüssigen Kühlmittels in der Kühlschleife.

11. Verfahren nach Anspruch 10, dadurch gekennzeichnet, daß die Blasenpumpe durch eine Kombination aus einem durch eine Heizeinrichtung (47, 49) erzeugten Kühlmitteldampf und dem desorbierten gasförmigen Kühlmittel angetrieben wird.

12. Verfahren nach Anspruch 8, gekennzeichnet durch den weiteren Schritt
Verwenden einer durch Dampf von der verdampften Wärmeübertragungsflüssigkeit angetriebenen Ausstoßpumpe (51, 53).

13. Verfahren nach Anspruch 1, gekennzeichnet durch den weiteren Schritt
Verwenden einer mechanischen Pumpeinrichtung (136) zum Unterstützen eines Antreibens einer flüssigen Wärmeübertragungsflüssigkeit oder eines flüssigen Kühlmittels in der Kühlschleife.

14. Verfahren nach Anspruch 1, dadurch gekennzeichnet, daß der Reaktor eine komplexe Verbindung enthält, die gebildet wird durch Adsorption eines polarisierten gasförmigen Kühlmittels auf einem Metallsalz mit einem Halogenid, Nitrat, Nitrit, Oxalat, Sulfat oder Sulfit eines Alkalimetalls, Erdalkalimetalls, Übergangsmetalls, Zink, Kadmium, Zinn, Aluminium, Natriumborofluorid oder Doppelmetallchlorid, in einem Vorgang zur Erhöhung von chemischen Sorptionsreaktionsraten zwischen dem gasförmigen Kühlmittel und der komplexen Verbindung durch Beschränkung der volumetrischen Ausdehnung der während zumindest der anfänglichen Adsorptionsreaktion gebildeten komplexen Verbindung, um eine Reaktionsproduktmasse zu erhalten, die verglichen mit einer ohne Beschränkung der volumetrischen Ausdehnung gebildeten komplexen Verbindung erhöhte chemische Sorptionsreaktionsraten aufweist.

15. Verfahren nach Anspruch 14, dadurch gekennzeichnet, daß das polarisierte gasförmige Kühlmittel Ammonium ist und das Metallsalz SrCl₂, SrBr₂, CaCl₂, CaBr₂, CaI₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ oder CrCl₂ oder Mischungen daraus umfaßt.

16. Verfahren nach Anspruch 1 oder 14, dadurch gekennzeichnet, daß
das System die Kondensationseinrichtung (12) zum Kondensieren der Kühlflüssigkeit und eine oder mehrere Leitungen (21, 44, 52, 68) zum Leiten des kondensierten Kühlmittels von der Kondensationseinrichtung zu der Kühlschleife enthält, und das Verfahren die weiteren Schritte Leiten eines desorbierten gasförmigen Kühlmittels von einem Reaktor zu der Kondensationseinrichtung, Kondensieren des Kühlmittels und
Leiten eines Teils des kondensierten Kühlmittels zu der Kühlschleife
umfaßt.

17. Verfahren nach Anspruch 16, dadurch gekennzeichnet, daß
das System eine Kühlmittelverdampfeinrichtung (14) enthält und
das Verfahren den weiteren Schritt
Leiten eines Teils des kondensierten Kühlmittels von der Kondensationseinrichtung zu der Verdampfeinrichtung umfaßt.

18. Verfahren nach Anspruch 1 oder 14, dadurch gekennzeichnet, daß
das System eine erste Kondensationseinrichtung (55) zum Kondensieren des gasförmigen Kühlmittels und eine zweite Kondensationseinrichtung (12) zur Kondensieren der Wärmeübertragungsflüssigkeit enthält und
das Verfahren die weiteren Schritte Leiten kondensierter Wärmeübertragungsflüssigkeit von der zweiten Kondensationseinrichtung zu der Kühlschleife und unter Druck setzen der Kühlschleife mit einem gasförmigen Kühlmittel zum Treiben der flüssigen Wärmeübertragungsflüssigkeit zu einem Adsorptionsreaktor umfaßt.

19. Verfahren nach Anspruch 1, dadurch gekennzeichnet, daß
das Sorptionsreaktionssystem einen oder mehrere derartige erste Reaktoren (10, 20), in denen ein Kühlmittel abwechselnd absorbiert und desorbiert wird, und einen oder mehrere derartige zweite Reaktoren (20, 10) umfaßt, in denen das Kühlmittel abwechselnd desorbiert und absorbiert wird, wobei jeder Reaktor eine Kondensationseinrichtung (12) zum Kondensieren verdampfter Wärmeübertragungsflüssigkeit besitzt,
die Kühlschleife eine Thermosyphonschleife (77) ist, die den Wärmeübertragungsabschnitt (17) des ersten Reaktors mit dem Wärmeübertragungsabschnitt (16) des zweiten Reaktors, oder im Fall einer Vielzahl von ersten und zweiten Reaktoren, jeden der ersten Reaktoren mit dem Wärmeübertragungsabschnitt (16) eines anderen der zweiten Reaktoren verbindet,
wobei das Verfahren den weiteren Schritt Leiten der Wärmeübertragungsflüssigkeit in der flüssigen Phase zu einem oder mehreren Adsorptionsreaktor-Wärmeübertragungsabschnitten während der Adsorptionsreaktion darin, wobei die verdampfte Wärmeübertragungsflüssigkeit die flüssige Wärmeübertragungsflüssigkeit in der Thermosyphonschleife zum Leiten der flüssigen Wärmeübertragungsflüssigkeit darin zu einem oder mehreren Adsorptionsreaktoren verschiebt,
umfaßt.

20. Verfahren nach Anspruch 19, dadurch gekennzeichnet, daß
die Wärmeübertragungsflüssigkeit das Kühlmittel umfaßt, und
das Verfahren die weiteren Schritte Deaktivieren der Thermosyphonschleife (77) in dem Desorptionsreaktor durch Leiten von unter Druck gesetztem gasförmigen Kühlmittel von dem Desorptionsreaktor durch den Wärmeübertragungsabschnitt des Desorptionsreaktors und Treiben des flüssigen Kühlmittels von dem Wärmeübertragungsabschnitt mit dem desorbierten gasförmigen Kühlmittel
umfaßt.

21. Verfahren nach Anspruch 20, dadurch gekennzeichnet, daß das desorbierte gasförmige Kühlmittel durch Erhitzen des Desorptionsreaktors mit einer ersten Heizeinrichtung (13) zum Antreiben der Desorptionsreaktion unter Druck gesetzt wird.

22. Verfahren nach Anspruch 21, gekennzeichnet durch die weiteren Schritte
Versorgen der ersten Heizeinrichtung (13) mit Energie, um ein flüssiges Kühlmittel von dem Wärmeübertragungsabschnitt zu verschieben, und danach
Erzeugen eines Druckes in der Thermosyphonschleife aus dem desorbierten gasförmigen Kühlmittel.

23. Verfahren nach Anspruch 20, dadurch gekennzeichnet, daß
die Thermosyphonschleife erste und zweite Leitungen (59) enthält, die die Kondensationseinrichtung (12) und die ersten bzw. zweiten Reaktoren (10, 20) verbinden, wobei jede der ersten und zweiten Leitungen ein Ventil (63, 66, 72, 74) enthält, das zum Öffnen und Schließen der ersten und zweiten Leitungen betätigt wird, und
das Verfahren den weiteren Schritt Schließen des Ventils, das einen Desorptionsreaktor während der Desorptionsreaktion mit der Kondensationseinrichtung verbindet, wodurch ein desorbiertes gasförmiges Kühlmittel durch den Wärmeübertragungsabschnitt (16) des Desorptionsreaktors (10) geleitet wird, um das flüssige Kühlmittel daraus zu treiben,
umfaßt.

24. Verfahren nach Anspruch 23, dadurch gekennzeichnet, daß das Ventil (72, 74) durch einen Kühlmitteldampfdruck von einem Desorptionsreaktor zum Schließen der den Desorptionsreaktor und die Kondensationseinrichtung verbindenden Leitung betätigt wird.

25. Verfahren nach Anspruch 21, dadurch gekennzeichnet, daß
das System eine zweite Heizeinrichtung (89) zum Erhitzen von Kühlmittel in der Thermosyphonschleife enthält und
das Verfahren den weiteren Schritt Versorgen der zweiten Heizeinrichtung mit Energie, um einen Dampfdruck zur Deaktivierung des Thermosyphonschleife in einem Desorptionsreaktor zu erhöhen, bis die erste Heizeinrichtung einen ausreichenden desorbierten Kühlmitteldampfdruck zum Deaktivieren des Thermosyphons erzeugt,
umfaßt.

26. Verfahren nach Anspruch 19, dadurch gekennzeichnet, daß die Wärmeübertragungsflüssigkeit durch ein Erhitzen des Desorptionsreaktors mit der ersten Heizeinrichtung (13) zum Antreiben der Desorptionsreaktion unter Druck gesetzt wird.

27. Verfahren nach Anspruch 19, dadurch gekennzeichnet, daß
die Thermosyphonschleife erste und zweite Leitungen (21, 56) umfaßt, die die Kondensationseinrichtung (12) und die ersten bzw. zweiten Reaktoren verbinden, wobei jede der ersten und zweiten Leitungen ein Ventil (60, 67) enthält, das zum Öffnen und Schließen der ersten und zweiten Leitungen betätigt wird, und
das Verfahren den weiteren Schritt Schließen des Ventils (60), das einen Desorptionsreaktor (10) während der Desorptionsreaktion mit der Kondensationseinrichtung verbindet, wodurch eine verdampfte Wärmeübertragungsflüssigkeit durch den Wärmeübertragungsabschnitt (16) des Desorptionsreaktors zum Treiben der flüssigen Wärmeübertragungsflüssigkeit davon weg geleitet wird,
umfaßt.

28. Verfahren nach Anspruch 27, dadurch gekennzeichnet, daß das Ventil (60) durch einen Kühlmitteldampfdruck von einem Desorptionsreaktor zum Schließen der den Desorptionsreaktor und die Kondensationseinrichtung (12) verbindenden Leitung betätigt wird.

29. Verfahren nach Anspruch 26, dadurch gekennzeichnet, daß
das System eine zweite Heizeinrichtung (89) zum Erhitzen einer verdampften Wärmeübertragungsflüssigkeit in der Thermosyphonschleife enthält und
das Verfahren den weiteren Schritt Versorgen der zweiten Heizeinrichtung mit Energie, um einen Dampfdruck zur Deaktivierung der Thermosyphonschleife in einem Desorptionsreaktor zu erhöhen, bis die erste Heizeinrichtung einen ausreichenden Dampfdruck zur Deaktivierung des Thermosyphons erzeugt,
umfaßt.

30. Verfahren nach Anspruch 19, dadurch gekennzeichnet, daß
die Wärmeübertragungsflüssigkeit das Kühlmittel umfaßt und
das Verfahren den weiteren Schritt Aktivieren der Thermosyphonschleife enthält, wobei dies eine Verwendung von unter Druck gesetztem Kühlmitteldruck zum Treiben eines flüssigen Kühlmittels in der Thermosyphonschleife zu einem Adsorptionsreaktor umfaßt, umfaßt.

31. Verfahren nach Anspruch 30, gekennzeichnet durch den weiteren Schritt
Verwenden eines desorbierten gasförmigen Kühlmittels von einem Desorptionsreaktor zum Treiben eines flüssigen Kühlmittels in der Thermosyphonschleife.

32. Verfahren nach Anspruch 31, dadurch gekennzeichnet, daß
das System weiterhin einen Sammelbehälter (85, 86) zum Aufnehmen eines flüssigen Kühlmittels und eine damit zusammenwirkende weitere Heizeinrichtung (89) enthält, wobei der Sammelbehälter mit einer Leitung (96) zum Leiten eines desorbierten gasförmigen Kühlmittels von einem Reaktor (90) und mit der Thermosyphonschleife verbunden ist, und
das Verfahren die weiteren Schritte Versorgen der Heizeinrichtung mit Energie zum unter Druck Setzen eines Kühlmitteldampfes in dem Sammelbehälter und Verschieben eines flüssigen Kühlmittels daraus in die Thermosyphonschleife
umfaßt.

33. Verfahren nach Anspruch 32, gekennzeichnet durch den weiteren Schritt
Versorgen der weiteren Heizeinrichtung mit Energie vor einem Desorbieren eines gasförmigen Kühlmittels in dem Desorptionsreaktor.

34. Verfahren nach Anspruch 20, dadurch gekennzeichnet, daß
das System weiterhin einen Sammelbehälter (85, 86) zum Aufnehmen eines flüssigen Kühlmittels und eine damit zusammenwirkende weitere Heizeinrichtung (89) enthält und
das Verfahren die weiteren Schritte Versorgen der Heizeinrichtung mit Energie zum unter Druck Setzen eines Kühlmitteldampfes in dem Sammelbehälter und Verschieben eines flüssigen Kühlmittels daraus in die Thermosyphonschleife
umfaßt.

35. Verfahren nach Anspruch 30, dadurch gekennzeichnet, daß
das System weiterhin einen Sammelbehälter (85, 86) zum Aufnehmen eines kondensierten Kühlmittels und weiterhin eine Heizeinrichtung (89) in der Thermosyphonschleife enthält und
das Verfahren weiterhin den Schritt Versorgen der Heizeinrichtung mit Energie zum Verdampfen eines flüssigen Kühlmittels, wodurch ein flüssiges Kühlmittel in der Thermosyphonschleife zu einem Adsorptionsreaktor getrieben wird,
umfaßt.

36. Verfahren nach Anspruch 19, dadurch gekennzeichnet, daß
das Kühlmittel und die Wärmeübertragungsflüssigkeit verschiedene Verbindungen umfassen und
das System erste Leitungen (102, 108, 109, 111) zum Leiten eines Kühlmittels zu und von den Reaktoren und zweite Leitungen (114) zum Leiten einer Wärmeübertragungsflüssigkeit darin und eine bewegbare Schnittstelleneinrichtung (116), die mit den ersten und zweiten Leitungen zusammenwirkt, zum Treiben einer Wärmeübertragungsflüssigkeit in die Thermosyphonschleife ansprechend auf einen Kühlmitteldampfdruck auf die bewegbare Schnittstelleneinrichtung enthält und
das Verfahren den weiteren Schritt Erzeugen eines ausreichenden Kühlmitteldampfdrucks von einem Desorptionsreaktor zum Aktivieren der Thermosyphonschleife umfaßt.

37. Verfahren nach Anspruch 36, dadurch gekennzeichnet, daß
die bewegbare Schnittstelleneinrichtung einen Sammelbehälter (117) zum Aufnehmen einer flüssigen Wärmeübertragungsflüssigkeit und eine damit zusammenwirkende Heizeinrichtung enthält und
das Verfahren weiterhin den Schritt
Versorgen der Heizeinrichtung mit Energie zum unter Druck Setzen eines Kühlmitteldampfes auf einer Seite der bewegbaren Schnittstelleneinrichtung, wodurch die Schnittstelleneinrichtung zum Verschieben der flüssigen Wärmeübertragungsflüssigkeit von dem Sammelbehälter in die Thermosyphonschleife bewegt wird,
umfaßt.

38. Verfahren nach Anspruch 19, dadurch gekennzeichnet, daß
das Kühlmittel und die Wärmeübertragungsflüssigkeit verschiedene Zusammensetzungen umfassen,
das System erste Leitungen zum Leiten eines Kühlmittels zu und von den Reaktoren und zweite Leitungen zum Leiten einer Wärmeübertragungsflüssigkeit darin und einen Sammelbehälter zum Aufnehmen einer flüssigen Wärmeübertragungsflüssigkeit und Zusammenwirken mit den ersten und zweiten Leitungen zum Treiben einer Wärmeübertragungsflüssigkeit in die Thermosyphonschleife enthält und
das Verfahren den weiteren Schritt zusätzliches Heizen des Sammelbehälters zum Verschieben einer flüssigen Wärmeübertragungsflüssigkeit daraus in die Thermosyphonschleife
umfaßt.

39. Verfahren nach Anspruch 19, dadurch gekennzeichnet, daß
die ersten und zweiten Reaktoren eine durch Adsorption eines polarisierten gasförmigen Kühlmittels auf einem Metallsalz mit einem Halogenid, Nitrat, Nitrit, Oxalat, Sulfat oder Sulfit eines Alkalimetalls, Erdalkalimetalls, Übergangsmetalls, Zink, Kadmium, Zinn, Aluminium, Natriumborofluorid oder Doppelmetallchlorid gebildete komplexe Verbindung enthalten und
das Verfahren weiterhin gekennzeichnet ist durch einen Vorgang zum Erhöhen von chemischen Sorptionsreaktionsraten zwischen dem polarisierten gasförmigen Kühlmittel und der komplexen Verbindung, mit einer Einschränkung der volumetrischen Ausdehnung der während zumindest der anfänglichen Adsorptionsreaktion gebildeten komplexen Verbindung zum Bilden eines Produkts, das verglichen mit einer ohne Einschränkung der volumetrischen Ausdehnung gebildeten komplexen Verbindung erhöhte chemische Sorptionsreaktionsraten erzeugen kann.

40. Verfahren nach Anspruch 39, dadurch gekennzeichnet, daß
das polarisierte gasförmige Kühlmittel Ammonium ist und das Metallsalz SrCl₂, SrBr₂, CaCl₂, CaBr₂, CaI₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ oder CrCl₂ oder Mischungen daraus umfaßt.

41. Verfahren nach Anspruch 1, dadurch gekennzeichnet, daß
das feste Adsorbens eine durch Adsorption eines polarisierten gasförmigen Kühlmittels auf einem Metallsalz mit einem Halogenid, Nitrat, Nitrit, Oxalat, Sulfat oder Sulfit eines Alkalimetalls, Erdalkalimetalls, Übergangsmetalls, Zink, Kadmium, Zinn, Aluminium, Natriumborofluorid oder Doppelmetallchlorid gebildete komplexe Verbindung ist, wobei die komplexe Verbindung durch ein Verfahren zum Erhöhen der chemischen Sorptionsreaktionsraten zwischen dem polarisierten Kühlmittel und der komplexen Verbindung gebildet ist, das die volumetrische Ausdehnung des während zumindest der anfänglichen Adsorptionsreaktion gebildeten komplexen Verbindung beschränkt, um ein Produkt zu bilden, das verglichen mit einer ohne Einschränkung der volumetrischen Ausdehnung gebildeten komplexen Verbindung erhöhte chemische Sorptionsreaktionsraten aufweist, wobei die Kühlschleife eine Leitungseinrichtung zum Leiten der Wärmeübertragungsflüssigkeit von einem oder mehreren der Reaktoren zu einer Kondensationseinrichtung (12) und von der Kondensationseinrichtung zu einem oder mehreren Reaktoren umfaßt, und
das Verfahren die weiteren Schritte Ausbilden eines Dampfdrucks zur Verschiebung der Wärmeübertragungsflüssigkeit in der Leitungseinrichtung zwischen der Kondensationseinrichtung und dem Reaktor, wodurch eine flüssige Wärmeübertragungsflüssigkeit zum Adsorptionsreaktor geleitet wird, und
Verdampfen zumindest eines Teils der flüssigen Wärmeübertragungsflüssigkeit in dem Adsorptionsreaktor und Verwenden der verdampften Wärmeübertragungsflüssigkeit zum Treiben der flüssigen Wärmeübertragungsflüssigkeit zum Adsorptionsreaktor
umfaßt.

42. Verfahren nach Anspruch 41, dadurch gekennzeichnet, daß das polarisierte gasförmige Kühlmittel Ammonium ist und das Metallsalz SrCl₂, SrBr₂, CaCl₂, CaBr₂, CaI₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ oder CrCl₂ oder Mischungen daraus umfaßt.

43. Verfahren nach Anspruch 41, dadurch gekennzeichnet, daß
das System eine Vielzahl von Reaktoren (110, 120, 130, 140) umfaßt und
jeder Reaktor eine verschiedene komplexe Verbindung in sich enthält, und
das Verfahren den weiteren Schritt Leiten zumindest eines Teil der Wärme von einem exothermischen Adsorptionsreaktor zu einem endothermischen Desorptionsreaktor zum Antreiben der Reaktion darin umfaßt.

44. Verfahren nach Anspruch 43, dadurch gekennzeichnet, daß
das Reaktionssystem drei oder mehr Reaktoren umfaßt, wobei jeder Reaktor eine verschiedene komplexe Verbindung darin enthält, wobei jede der verschiedenen komplexen Verbindungen einen verschiedenen Gasdampfdruck besitzt, der im wesentlichen unabhängig von der Konzentration des gasförmigen Verbrennungshilfsstoffes ist,
wobei das Verfahren den weiteren Schritt Leiten der Wärmeübertragungsflüssigkeit zwischen Reaktoren, die die nächsten nachfolgenden höheren und nächsten nachfolgenden niedrigeren Dampfdruckreaktionsprodukte enthalten,
umfaßt.

45. Sorptionsreaktionssystemgerät mit:
einer Vielzahl von Reaktoren (10, 20), die ein festes Adsorbens enthalten, das ein gasförmiges Kühlmittel abwechselnd adsorbiert und desorbiert, wobei die Reaktoren eine Reaktorwärmeaustauscheinrichtung (16, 17) zum Leiten einer Wärmeübertragungsflüssigkeit in einer Wärmeaustauschpreisgabe zu dem Adsorbens enthalten, einer Einrichtung (13, 14) zum Heizen der ersten und zweiten Reaktoren,
einer Kondensationseinrichtung (12);
einer Verdampfungseinrichtung (14);
einer Wärmeausstoßeinrichtung (22, 21), die mit der Reaktorwärmeaustauscheinrichtung jedes der Reaktoren zum Ausstoßen von Wärme während einer Adsorption darin in Verbindung stehen, wobei die Wärmeausstoßeinrichtung eine erste Leitung (41) zum Leiten einer verdampften Wärmeübertragungsflüssigkeit von einem Adsorptionsreaktor zu der Kondensationseinrichtung umfaßt, und eine zweite Leitung (21, 22, 4) stromabwärts der Kondensationseinrichtung zum Leiten der kondensierten Wärmeübertragungsflüssigkeit von der Kondensationseinrichtung zu einem Adsorptionsreaktor, wobei das Gerät weiterhin
eine in der Wärmeausstoßeinrichtung angeordnete Wärmeübertragungsflüssigkeit umfaßt, die für eine Phasenveränderung von einer Flüssigkeit in ein Gas bei einer Temperatur auf oder unter der Adsorptionstemperatur in einem Adsorptionsreaktor geeignet ist, gekennzeichnet durch
eine dampfbetätigte Flüssigkeitsverschiebeeinrichtung mit einer oder mehreren Gasdruckleitungen (23), die einen Desorptionsreaktor mit der zweiten Leitung (22) der Wärmeausstoßeinrichtung an einer Verbindung (15) stromabwärts der Kondensationseinrichtung zum Leiten einer die Verbindung passierenden Wärmeübertragungsflüssigkeit in der flüssigen Phase zu einer Adsorptionsreaktorwärmeaustauscheinrichtung mit desorbiertem gasförmigen Kühlmittel oder verdampfter Wärmeübertragungsflüssigkeit verbindet.

46. Gerät nach Anspruch 45, dadurch gekennzeichnet, daß die Wärmeübertragungsflüssigkeit dieselbe Verbindung wie das Kühlmittel besitzt.

47. Gerät nach Anspruch 45, dadurch gekennzeichnet, daß die Flüssigkeitsverschiebeeinrichtung eine gasbetätigte Pumpe (51, 53) umfaßt, die durch einen Druck von der verdampften Wärmeübertragungsflüssigkeit oder dem gasförmigen Kühlmittel angetrieben wird.

48. Gerät nach Anspruch 47, dadurch gekennzeichnet, daß die Pumpe eine Blasenpumpe (15) mit einem im allgemeinen vertikalen Rohr (22) umfaßt, das eine Wärmeübertragungsflüssigkeit in einer flüssigen Phase enthält, die mit der Reaktorwärmeaustauscheinrichtung (17) und mit der einen oder mehreren Gasdruckleitungen (23) in Verbindung steht, zum Leiten der verdampften Wärmeübertragungsflüssigkeit oder des desorbierten gasförmigen Kühlmittels zum Antreiben der Wärmeübertragungsflüssigkeit in der flüssigen Phase entlang des vertikalen Rohrs.

49. Gerät nach Anspruch 46, dadurch gekennzeichnet, daß die Flüssigkeitsverschiebeeinrichtung einen Sammelbehälter (50) zum Halten der flüssigen Wärmeübertragungsflüssigkeit und eine oder mehrere Ausstoßeinrichtungen (51, 53) zum Pumpen des flüssigen Kühlmittels von dem Sammelbehälter zu den Reaktoren umfaßt.

50. Gerät nach Anspruch 45, dadurch gekennzeichnet, daß die Flüssigkeitsverschiebeeinrichtung weiterhin eine weitere Heizeinrichtung (47, 49) umfaßt, die mit der zweiten Leitung der Wärmeausstoßeinrichtung zum Heizen und Verdampfen der flüssigen Wärmeübertragungsflüssigkeit oder des Kühlmittels darin zusammenwirkt, zum Antreiben der flüssigen Wärmeübertragungsflüssigkeit oder des flüssigen Kühlmittels zur Reaktorwärmeaustauscheinrichtung zum Kühlen eines Adsorptionsreaktors.

51. Gerät nach Anspruch 50, gekennzeichnet durch erste Einweg-Ventile (37) zur Verhinderung eines Rückflusses des erwärmten flüssigen Wärmeübertragungsflüssigkeit oder des Kühlmittels entlang der zweiten Leitung des Wärmeausstoßeinrichtung.

52. Gerät nach Anspruch 45, gekennzeichnet durch eine Durchgangswegeinrichtung (61, 64) zum Leiten des desorbierten gasförmigen Kühlmittels von dem festen Adsorbens zu der Reaktorwärmeaustauscheinrichtung.

53. Gerät nach Anspruch 52, gekennzeichnet durch ein ausgewählt betätigtes Ventil (63, 66), das mit der Durchgangswegeinrichtung und der ersten Leitung der Wärmeausstoßeinrichtung zusammenwirkt, zum ausgewählten Leiten des desorbierten gasförmigen Kühlmittels zu der Reaktorwärmeaustauscheinrichtung während der Reaktordesorption und zum ausgewählten Leiten des verdampften Kühlmittels von einem Reaktor zu einer Kondensationseinrichtung während der Reaktoradsorption.

54. Gerät nach Anspruch 52, gekennzeichnet durch druckbetätigte Ventile (72, 74), die mit dem ersten Teil der Wärmeausstoßeinrichtung und der Durchgangswegeinrichtung zusammenwirken und auf einen desorbierten Kühlmitteldruck zum Schließen während der Reaktordesorption anspricht, wodurch desorbiertes gasförmiges Kühlmittels während der Reaktordesorption zu der Reaktorwärmeaustauscheinrichtung geleitet wird, und zum Öffnen während der Reaktoradsorption, wodurch ein verdampftes Kühlmitte von einem Reaktor zu einer Kondensationseinrichtung geleitet wird.

55. Gerät nach Anspruch 45, dadurch gekennzeichnet, daß die Kondensationseinrichtung erste und zweite Kondensationseinrichtungen umfaßt, wobei die erste Kondensationseinrichtung (12) mit der Wärmeausstoßleitungsschleife zur Kondensation der Wärmeübertragungsflüssigkeit und die zweite Kondensationseinrichtung (65) mit einer Gasdruckleitung zur Kondensation des desorbierten Kühlmittels in Verbindung steht.

56. Gerät nach Anspruch 55, gekennzeichnet durch eine ausgewählt betätigte Ventileinrichtung (60, 67), die mit der Wärmeausstoßleitungsschleife zum ausgewählten Leiten der verdampften Wärmeübertragungsflüssigkeit von einem Reaktor zu der ersten Kondensationseinrichtung (12) während der Reaktoradsorption und zum unter Druck Setzen der Schleife mit verdampfter Wärmeübertragungsflüssigkeit von einer Desorptionsreaktorwärmeaustauscheinrichtung während der Reaktordesorption.

57. Gerät nach Anspruch 45, dadurch gekennzeichnet, daß die Flüssigkeitsverschiebeeinrichtung eine bewegbare Schnittstelleneinrichtung (116) ansprechend auf einen Dampfdruck auf einer ersten Seite davon zum Verschieben der Flüssigkeit auf die zweite Seite davon umfaßt.

58. Gerät nach Anspruch 57, dadurch gekennzeichnet, daß die Flüssigkeitsverschiebeeinrichtung einen Sammelbehälter (101) enthält, der mit der bewegbaren Schnittstelleneinrichtung zusammenwirkt.

59. Gerät nach Anspruch 58, dadurch gekennzeichnet, daß der Sammelbehälter mit der einen oder mehreren Gasdruckleitungen (102, 108) zum Empfangen des desorbierten gasförmigen Kühlmittels darin und mit der Kondensationseinrichtung zum Empfangen der Wärmeübertragungsflüssigkeit in Verbindung steht.

60. Gerät nach Anspruch 58, dadurch gekennzeichnet, daß die bewegbare Schnittstelleneinrichtung (116) eine in dem Sammelbehälter angeordneten Membran umfaßt.

61. Gerät nach Anspruch 45, dadurch gekennzeichnet, daß
die Flüssigkeitsverschiebeeinrichtung einen oder mehrere Sammelbehälter (85, 86) zum Halten der flüssigen Wärmeübertragungsflüssigkeit und zum in Verbindung Stehen mit den Reaktoren über die zweite Leitung der Wärmeausstoßeinrichtung umfaßt und
die eine oder mehrere Gasdruckleitungen desorbiertes gasförmiges Kühlmittel von einem Desorptionsreaktor empfängt.

62. Gerät nach Anspruch 61, dadurch gekennzeichnet, daß
der eine oder mehrere Sammelbehälter weiterhin eine weitere Heizeinrichtung (89) umfassen und damit zum Heizen und
Verdampfen des Kühlmittels zum Verschieben der flüssigen Wärmeübertragungsflüssigkeit von dem Sammelbehälter zu der Reaktorwärmeaustauscheinrichtung zusammenwirkt.

63. Gerät nach Anspruch 45, dadurch gekennzeichnet, daß
jeder der Reaktoren ein verschiedenes festes Adsorbens darin enthält, wobei jedes feste Adsorbens ein Reaktionsprodukt zwischen einem festen Verbrennungshilfsstoff und einem darauf adsorbierten gasförmigen Verbrennungshilfsstoff umfaßt, wobei jedes der verschiedenen Reaktionsprodukte einen verschiedenen gasförmigen Verbrennungshilfsstoffdampfdruck besitzt, der im wesentlichen unabhängig von der Konzentration des gasförmigen Verbrennungshilfsstoffes ist.

64. Gerät nach Anspruch 63, gekennzeichnet durch
eine Vielzahl von drei oder mehr Reaktoren (110, 120, 130, 140), wobei die verschiedenen Reaktionsprodukte darin eine ansteigende Reihenfolge von gasförmigem Verbrennungshilfsstoffdampfdruck mit der Adsorptionstemperatur eines niedrigeren Dampfdruckreaktionsprodukts bei einem niedrigeren Reaktionsdruck besitzt, die höher als die Desorptionstemperatur des nächsten nachfolgenden höheren Dampfdruckreaktionsprodukts bei einem hohen Reaktionsdruck ist, und eine Einrichtung zum Leiten der Wärmeübertragungsflüssigkeit zwischen den Reaktoren zum Ausstoßen einer Adsorptionswärme von dem Reaktor mit der höchsten Temperatur zu dem Reaktor mit der nächst niedrigeren Temperatur.

65. Gerät nach Anspruch 45, gekennzeichnet durch
eine einzelne Wärmequelle (175) zum Verdampfen der flüssigen Wärmeübertragungsflüssigkeit, ein Dreiweg-Ventil (171) zum ausgewählten Leiten der verdampften Wärmeübertragungsflüssigkeit jeweils zu den Reaktoren und eine Leitungseinrichtung, die die einzelne Wärmequelle und das Dreiweg-Ventilelement verbindet, zum Leiten des verdampften Kühlmittels von der Wärmequelle zu dem Ventil.

66. Gerät nach Anspruch 65, dadurch gekennzeichnet, daß
die Reaktoren einen Wärmeübertragungsabschnitt (171) enthalten, der in einer Wärmeübertragungsverbindung mit dem festen Adsorbens steht, zur Kondensation der verdampften Wärmeübertragungsflüssigkeit.

67. Gerät nach Anspruch 45, dadurch gekennzeichnet, daß die Reaktoren eine komplexe Verbindung enthalten, die gebildet wird durch Adsorption eines polarisierten gasförmigen Kühlmittels auf einem Metallsalz mit einem Halogenid, Nitrat, Nitrit, Oxalat, Sulfat oder Sulfit eines Alkalimetalls, Erdalkalimetalls, Übergangsmetalls, Zink, Kadmium, Zinn, Aluminium, Natriumborofluorid oder Doppelmetallchlorid, und durch ein Verfahren zur Erhöhung von Adsorptions- und Desorptionsreaktionsraten durch Beschränkung der volumetrischen Ausdehnung der komplexen Verbindung zumindest während der anfänglichen Adsorptionsreaktion.

68. Verfahren nach Anspruch 67, dadurch gekennzeichnet, daß das polarisierte gasförmige Kühlmittel Ammonium ist und das Metallsalz SrCl₂, SrBr₂, CaCl₂, CaBr₂, Cal₂, CoCl₂, CoBr₂, BaCl₂, BaBr₂, MgCl₂, MgBr₂, FeCl₂, FeBr₂, NiCl₂, ZnCl₂, SnCl₂, MnCl₂, MnBr₂ oder CrCl₂ oder Mischungen daraus umfaßt.

69. Gerät nach Anspruch 68, dadurch gekennzeichnet, daß die Wärmeübertragungsflüssigkeit das Ammonium-Kühlmittel umfaßt.

70. Gerät nach Anspruch 62, dadurch gekennzeichnet, daß die Wärmeübertragungsflüssigkeit das Kühlmittel umfaßt und die Kondensationseinrichtung mit der Wärmeausstoßeinrichtung und dem einen oder mehreren Sammelbehälter zur Zufuhr von kondensiertem Kühlmittel dazu in Verbindung steht.

71. Gerät nach Anspruch 63 oder 64, dadurch gekennzeichnet, daß
Adsorptionswärme in einem Reaktor (110, 120) einer niedrigeren Stufe und kälteren Temperatur durch das kondensierte Kühlmittel in der Reaktorwärmeaustauscheinrichtung ausgestoßen wird und bei einer Adsorptionswärme einem Reaktor einer höheren Stufe und wärmeren Temperatur (130, 140) durch die flüssige Wärmeübertragungsflüssigkeit in der Reaktorwärmeaustauscheinrichtung ausgestoßen wird, und
die Wärmeausstoßschleife eine oder mehrere Kühlmittelleitungen (144), die mit der Reaktorwärmeaustauscheinrichtung zum Zirkulieren des Kühlmittels von der Reaktorwärmeaustauscheinrichtung des Reaktors mit der kühleren Temperatur zur Kondensationseinrichtung und zurück zur Reaktorwärmeaustauscheinrichtung des Reaktors mit der kühleren Temperatur zusammenwirkt, und eine oder mehrere Wärmeübertragungsflüssigkeitsleitungen (137) zum Leiten der Wärmeübertragungsflüssigkeit zwischen der Wärmeaustauscheinrichtung eines Reaktors mit einer höheren Temperatur und eines Reaktors mit einer niedrigeren Temperatur enthält.

## Revendications

1. Procédé de refroidissement d'un réacteur adsorbant (20) dans un système à réaction de sorption comprenant des réacteurs (10, 20) contenant un adsorbant solide sur lequel un réfrigérant gazeux est alternativement adsorbé et désorbé, un condenseur (12) pour condenser un fluide de transfert de chaleur vaporisé ou un réactant gazeux et une boucle de refroidissement (22, 21) communiquant avec une section de transfert de chaleur (17) de chacun desdits réacteurs pour diriger du fluide de transfert de chaleur ou du réfrigérant vers et depuis lesdits réacteurs, le procédé 1 consistant à diriger du fluide de transfert de chaleur en phase liquide ou du réfrigérant liquide (99), dans lequel un changement de phase de liquide à gaz se produit à une température égale à ou inférieure à la température d'adsorption, vers ledit réacteur adsorbant en communication d'échange de chaleur avec l'adsorbant contenu dans celui-ci, ladite boucle de refroidissement comportant une première partie de boucle de refroidissement (21) en aval dudit condenseur pour diriger du fluide de transfert de chaleur ou réfrigérant liquide, condensé dans ledit condenseur, vers ladite section de transfert de chaleur de réacteur, et caractérisé en ce qu'elle comporte une deuxième partie de boucle de refroidissement (23) communiquant avec ladite première partie de boucle de refroidissement à une jonction (15), en aval dudit condenseur, pour diriger du fluide de transfert de chaleur vaporisé ou du réactant gazeux d'un réacteur désorbant vers ladite jonction en aval, de sorte que la pression dudit fluide de transfert de chaleur vaporisé ou dudit réfrigérant gazeux entraîne ledit fluide de transfert de chaleur liquide ou ledit réfrigérant liquide circulant dans ladite boucle de refroidissement de ladite jonction en aval vers le réacteur adsorbant.

2. Procédé de la revendication 1, consistant à vaporiser du fluide de transfert de chaleur en chauffant ledit fluide de transfert de chaleur liquide dans ladite boucle de refroidissement.

3. Procédé de la revendication 2, consistant à fournir des clapets unidirectionnels (11, 13) le long de ladite boucle de refroidissement pour empêcher un écoulement retour du fluide de transfert de chaleur liquide dans celle-ci.

4. Procédé de la revendication 1, dans lequel ladite boucle de refroidissement comprend un conduit généralement vertical (22) et dans lequel du fluide de transfert de chaleur liquide est entraîné vers le haut, le long dudit conduit généralement vertical, vers le réacteur adsorbant par ledit fluide de transfert de chaleur vaporisé.

5. Procédé de la revendication 4, consistant à chauffer ledit fluide de transfert de chaleur liquide dans ledit conduit généralement vertical (22).

6. Procédé de la revendication 1, dans lequel ledit fluide de transfert de chaleur comprend ledit réfrigérant, et dans lequel du réfrigérant gazeux désorbé est dirigé vers ladite boucle de refroidissement à partir d'un réacteur désorbant pour entraîner du réfrigérant liquide vers ledit réacteur adsorbant.

7. Procédé de la revendication 1, dans lequel ledit fluide de transfert de chaleur liquide ou ledit réfrigérant liquide est vaporisé dans la section de transfert de chaleur (17) d'un réacteur adsorbant et est dirigé vers ledit condenseur (12), et une partie du fluide de transfert de chaleur condensé ou du réfrigérant condensé est dirigée vers ladite boucle de refroidissement.

8. Procédé de la revendication 1, consistant à utiliser une pompe à éjecteur (51, 53) pour diriger ledit fluide de transfert de chaleur liquide ou réfrigérant liquide dans ladite boucle de refroidissement.

9. Procédé de la revendication 8, dans lequel ladite pompe à éjecteur (51, 53) est entraînée par une combinaison de vapeur de réfrigérant générée par un chauffage et ledit réfrigérant gazeux désorbé.

10. Procédé de la revendication 1, consistant à utiliser une pompe à bulles (15) pour diriger ledit fluide de transfert de chaleur liquide ou réfrigérant liquide dans ladite boucle de refroidissement.

11. Procédé de la revendication 10, dans lequel ladite pompe à bulles est entraînée par une combinaison de vapeur de réfrigérant générée par un chauffage (47, 49) et ledit réfrigérant gazeux désorbé.

12. Procédé de la revendication 8, consistant à utiliser une pompe à éjecteur (51, 53) entraînée par de la vapeur provenant dudit fluide de transfert de chaleur vaporisé.

13. Procédé de la revendication 1, utilisant une pompe mécanique (136) pour aider à entraîner du fluide de transfert de chaleur liquide ou réfrigérant liquide dans ladite boucle de refroidissement.

14. Procédé de la revendication 1, dans lequel lesdits réacteurs contiennent un composé complexe formé par l'adsorption d'un réfrigérant gazeux polaire sur un sel métallique comprenant un halogénure, un nitrate, un nitrite, un oxalate, un sulfate, ou un sulfite d'un métal alcalin, d'un métal alcalino-terreux, d'un métal transitoire, de zinc, de cadmium, d'étain, d'aluminium, de fluoborate de sodium, ou d'un chlorure métallique double, selon une méthode d'augmentation des vitesses de réaction de chimisorption entre le réfrigérant gazeux et le composé complexe, en restreignant l'expansion volumétrique du composé complexe formé au cours d'au moins la réaction d'adsorption initiale pour former une masse de produit réactionnel permettant des vitesses de réaction de chimisorption augmentées par rapport à un composé complexe formé sans restreindre ladite expansion volumétrique.

15. Procédé de la revendication 14, dans lequel ledit réfrigérant gazeux polaire est de l'ammoniac et ledit sel métallique comprend du SrCl₂, du SrBr₂, du CaCl₂, du CaBr₂, du Cal₂, du CoCl₂, du CoBr₂, du BaCl₂, du BaBr₂, du MgCl₂, du MgBr₂, du FeCl₂, du FeBr₂, du NiCl₂, du ZnCl₂, du SnCl₂, du MnCl₂, du MnBr₂, ou du CrCl₂ où des mélanges de ceux-ci.

16. Procédé de la revendication 1 ou 14, dans lequel ledit système comprend ledit condenseur (12) pour condenser ledit fluide réfrigérant et un ou plusieurs conduits (21, 44, 52, 68) pour diriger du réfrigérant condensé dudit condenseur vers ladite boucle de refroidissement, ledit procédé consistant à diriger du réfrigérant gazeux désorbé d'un réacteur vers ledit condenseur, condenser ledit réfrigérant, et diriger une partie dudit réfrigérant condensé vers ladite boucle de refroidissement.

17. Procédé de la revendication 16, dans lequel ledit système comprend un évaporateur (14) de réfrigérant, ledit procédé consistant à diriger une partie dudit réfrigérant condensé dudit condenseur vers ledit évaporateur.

18. Procédé de la revendication 1 ou 14, dans lequel ledit système comprend un premier condenseur (55) pour condenser du réfrigérant gazeux et un deuxième condenseur (12) pour condenser du fluide de transfert de chaleur, ledit procédé consistant à diriger du fluide de transfert de chaleur condensé dudit deuxième condenseur vers ladite boucle de refroidissement, 1 et pressuriser ladite boule de refroidissement avec du réfrigérant gazeux pour forcer du fluide de transfert de chaleur liquide vers un réacteur adsorbant.

19. Procédé selon la revendication 1, dans lequel le système à réaction de sorption comprend un ou plusieurs premiers réacteurs (10, 20) dans lesquels un réfrigérant est alternativement adsorbé et désorbé, et un ou plusieurs deuxièmes réacteurs (20, 10) dans lesquels ledit réfrigérant est alternativement désorbé et adsorbé, chaque réacteur ayant un condenseur (12) pour condenser du fluide de transfert de chaleur vaporisé, la boucle de refroidissement étant une boucle thermosiphon (77) mettant en communication la section de transfert de chaleur (17) dudit premier réacteur avec la section de transfert de chaleur (16) du deuxième réacteur ou, dans le cas de plusieurs premiers et deuxièmes réacteurs, de chacun desdits premiers réacteurs avec la section de transfert de chaleur (16) de l'un différent desdits deuxièmes réacteurs, le procédé consistant à diriger le fluide de transfert de chaleur en phase liquide vers la ou les sections de transfert de chaleur des réacteurs adsorbants au cours de la réaction d'adsorption dans ceux-ci, dans lequel du fluide de transfert de chaleur vaporisé déplace du fluide de transfert de chaleur liquide dans ladite boucle thermosiphon pour diriger ledit fluide de transfert de chaleur liquide dans celle-ci vers ledit ou lesdits réacteurs adsorbants.

20. Procédé de la revendication 19, dans lequel ledit fluide de transfert de chaleur comprend ledit réfrigérant, ledit procédé consistant à désactiver la boucle thermosiphon (77) dans ledit réacteur désorbant en dirigeant du réfrigérant gazeux désorbé pressurisé dudit réacteur désorbant à travers la section de transfert de chaleur dudit réacteur désorbant, et évacuer du réfrigérant liquide de ladite section de transfert de chaleur avec ledit réfrigérant gazeux désorbé.

21. Procédé de la revendication 20, dans lequel le réfrigérant gazeux désorbé est pressurisé en chauffant ledit réacteur désorbant avec des premiers moyens de chauffage (13) pour provoquer la réaction de désorption.

22. Procédé de la revendication 21, consistant à enclencher lesdits premiers moyens de chauffage (13) pour déplacer du réfrigérant liquide de ladite section de transfert de chaleur, et par la suite pour créer une pression dans ladite boucle thermosiphon par l'intermédiaire du réfrigérant gazeux désorbé.

23. Procédé de la revendication 20, dans lequel ladite boucle thermosiphon comprend un premier et un deuxième conduit (59) mettant en communication ledit condenseur (12) et lesdits premier et deuxième réacteurs (10, 20), respectivement, chacun desdits premier et deuxième conduits comprenant un clapet (63, 66, 72, 74) actionné pour ouvrir et fermer lesdits premier et deuxième conduits, ledit procédé consistant à fermer le clapet mettant en communication un réacteur désorbant avec le condenseur au cours de la réaction de désorption de sorte que du réfrigérant gazeux désorbé est dirigé à travers ladite section de transfert de chaleur (16) dudit réacteur désorbant (10) pour évacuer ledit réfrigérant liquide de celle-ci.

24. Procédé de la revendication 23, dans lequel ledit clapet (72, 74) est actionné par la pression de vapeur de réfrigérant provenant d'un réacteur désorbant pour fermer le conduit mettant en communication ledit réacteur désorbant et le condenseur.

25. Procédé de la revendication 21, dans lequel ledit système comprend des deuxièmes moyens de chauffage (89) pour chauffer du réfrigérant dans ladite boucle thermosiphon, ledit procédé consistant à enclencher lesdits deuxièmes moyens de chauffage pour augmenter la pression de vapeur pour désactiver ladite boucle thermosiphon dans un réacteur désorbant jusqu'à ce que lesdits premiers moyens de chauffage créent une pression de vapeur de réfrigérant désorbé suffisante pour désactiver ledit thermosiphon.

26. Procédé de la revendication 19, dans lequel le fluide de transfert de chaleur est pressurisé en chauffant ledit réacteur désorbant avec des premiers moyens de chauffage (13) pour provoquer la réaction de désorption.

27. Procédé de la revendication 19, dans lequel ladite boucle thermosiphon comprend des premier et deuxième conduits (21, 56) mettant en communication ledit condenseur (12) et lesdits premier et deuxième réacteurs, respectivement, chacun desdits premier et deuxième conduits comprenant un clapet (60, 67) actionné pour ouvrir et fermer lesdits premier et deuxième conduits, ledit procédé consistant à fermer le clapet (60) mettant en communication un réacteur désorbant (10) avec le condenseur au cours de la réaction de désorption de sorte que du fluide de transfert de chaleur vaporisé est dirigé à travers ladite section de transfert de chaleur (16) dudit réacteur désorbant pour évacuer ledit fluide de transfert de chaleur liquide de celle-ci.

28. Procédé de la revendication 27, dans lequel ledit clapet (60) est actionné par la pression de vapeur de réfrigérant provenant d'un réacteur désorbant pour fermer le conduit mettant en communication ledit réacteur désorbant et le condenseur (12).

29. Procédé de la revendication 26, dans lequel ledit système comprend des deuxièmes moyens de chauffage (89) pour chauffer du fluide de transfert de chaleur vaporisé dans ladite boucle thermosiphon, ledit procédé consistant à enclencher lesdits deuxièmes moyens de chauffage pour augmenter la pression de vapeur pour désactiver ladite boucle thermosiphon dans un réacteur désorbant jusqu'à ce que lesdits premiers moyens de chauffage créent une pression de vapeur suffisante pour désactiver ledit thermosiphon.

30. Procédé de la revendication 19, dans lequel ledit fluide de transfert de chaleur comprend ledit réfrigérant, ledit procédé consistant à activer la boucle thermosiphon en utilisant de la vapeur de réfrigérant pressurisée pour forcer du réfrigérant liquide dans ladite boucle thermosiphon vers un réacteur adsorbant.

31. Procédé de la revendication 30, consistant à utiliser du réfrigérant gazeux désorbé provenant d'un réacteur désorbant pour forcer du réfrigérant liquide dans ladite boucle thermosiphon.

32. Procédé de la revendication 31, dans lequel ledit système comprend en outre un réservoir (85, 86) pour recevoir du réfrigérant liquide et un chauffage supplémentaire (89) coopérant avec celui-ci, ledit réservoir communiquant avec un conduit (96) pour diriger du réfrigérant gazeux désorbé depuis un réacteur (90) et avec ladite boucle thermosiphon, ledit procédé consistant à enclencher ledit chauffage pour pressuriser de la vapeur de réfrigérant dans ledit réservoir et déplacer du réfrigérant liquide depuis celui-ci dans ladite boucle thermosiphon.

33. Procédé de la revendication 32, consistant à enclencher ledit chauffage supplémentaire avant de désorber du réfrigérant gazeux dans ledit réacteur désorbant.

34. Procédé de la revendication 20, dans lequel ledit système comprend en outre un réservoir (85, 86) pour recevoir du réfrigérant liquide et un chauffage supplémentaire (89) coopérant avec celui-ci, ledit procédé consistant à enclencher ledit chauffage pour pressuriser de la vapeur de réfrigérant dans ledit réservoir et déplacer du réfrigérant liquide depuis celui-ci dans ladite boucle thermosiphon.

35. Procédé de la revendication 30, dans lequel ledit système comprend en outre un réservoir (85, 86) pour recevoir du réfrigérant condensé, et un chauffage supplémentaire (89) dans ladite boucle thermosiphon, ledit procédé consistant à enclencher ledit chauffage pour vaporiser du réfrigérant liquide, forçant de ce fait du réfrigérant liquide dans ladite boucle thermosiphon vers un réacteur adsorbant.

36. Procédé de la revendication 19, dans lequel ledit réfrigérant et ledit fluide de transfert de chaleur comprennent des compositions différentes et dans lequel ledit système comprend des premiers conduits (102, 108, 109, 111) pour diriger du réfrigérant vers et depuis lesdits réacteurs, et des deuxièmes conduits (114) pour diriger du fluide de transfert de chaleur dans celui-ci, et une interface mobile (116) coopérant avec lesdits premiers et deuxièmes conduits pour forcer du fluide de transfert de chaleur dans ladite boucle thermosiphon en réponse à une pression de vapeur de réfrigérant appliquée sur lesdits moyens à interface mobile, ledit procédé consistant à générer une pression de vapeur de réfrigérant suffisante à partir d'un réacteur désorbant pour activer ladite boucle thermosiphon.

37. Procédé de la revendication 36, dans lequel ladite interface mobile comprend un réservoir (117) pour recevoir du fluide de transfert de chaleur liquide et un chauffage coopérant avec celui-ci, ledit procédé consistant à enclencher ledit chauffage pour pressuriser de la vapeur de réfrigérant d'un côté de ladite interface mobile, déplaçant de ce fait ladite interface pour déplacer du fluide de transfert de chaleur liquide à partir dudit réservoir dans ladite boucle thermosiphon.

38. Procédé de la revendication 19, dans lequel ledit réfrigérant et ledit fluide de transfert de chaleur comprennent des compositions différentes, ledit système comprenant des premiers conduits pour diriger du réfrigérant vers et depuis lesdits réacteurs et des deuxièmes conduits pour diriger du fluide de transfert de chaleur dans celui-ci, et un réservoir pour recevoir du fluide de transfert de chaleur liquide et coopérant avec lesdits premiers et deuxièmes conduits pour forcer du fluide de transfert de chaleur dans ladite boucle thermosiphon, ledit procédé consistant à chauffer en sus ledit réservoir pour déplacer du fluide de transfert de chaleur liquide depuis celui-ci dans ladite boucle thermosiphon.

39. Procédé de la revendication 19, dans lequel lesdits premier et deuxième réacteurs contiennent un composé complexe formé par l'adsorption d'un réfrigérant gazeux polaire sur un sel métallique comprenant un halogénure, un nitrate, un nitrite, un oxalate, un sulfate, ou un sulfite d'un métal alcalin, d'un métal alcalino-terreux, d'un métal transitoire, de zinc, de cadmium, d'étain, d'aluminium, de fluoborate de sodium, ou d'un chlorure métallique double, ledit procédé comprenant une méthode d'augmentation des vitesses de réaction de chimisorption entre le réfrigérant gazeux polaire et le composé complexe consistant à restreindre l'expansion volumétrique du composé complexe formé au cours d'au moins la réaction d'adsorption initiale pour former un produit permettant des vitesses de réaction de chimisorption augmentées par rapport à un composé complexe formé sans restreindre ladite expansion volumétrique.

40. Procédé de la revendication 39, dans lequel ledit réfrigérant gazeux polaire est de l'ammoniac et ledit sel métallique comprend du SrCl₂, du SrBr₂, du CaCl₂, du CaBr₂, du Cal₂, du CoCl₂, du CoBr₂, du BaCl₂, du BaBr₂, du MgCl₂, du MgBr₂, du FeCl₂, du FeBr₂, du NiCl₂, du ZnCl₂, du SnCl₂, du MnCl₂, du MnBr₂, ou du CrCl₂ ou des mélanges de ceux-ci.

41. Procédé selon la revendication 1, dans lequel l'adsorbant solide est un composé complexe formé par l'adsorption d'un réfrigérant gazeux polaire sur un sel métallique comprenant un halogénure, un nitrate, un nitrite, un oxalate, un sulfate, ou un sulfite d'un métal alcalin, d'un métal alcalino-terreux, d'un métal transitoire, de zinc, de cadmium, d'étain, d'aluminium, de fluoborate de sodium, ou d'un chlorure métallique double, dans lequel ledit composé complexe est formé selon une méthode d'augmentation des vitesses de réaction de chimisorption entre le réfrigérant polaire et le composé complexe consistant à restreindre l'expansion volumétrique du composé complexe formé au cours d'au moins la réaction d'adsorption initiale pour former un produit permettant des vitesses de réaction de chimisorption augmentée par rapport à un composé complexe formé sans restreindre ladite expansion volumétrique, dans lequel la boucle de refroidissement comprend des conduits pour diriger le fluide de transfert de chaleur de l'un ou de plusieurs desdits réacteurs vers un condenseur (12) et depuis ledit condenseur vers ledit ou lesdits réacteurs, le procédé consistant à fournir de la pression de vapeur pour déplacer ledit fluide de transfert de chaleur dans lesdits conduits entre ledit condenseur et ledit réacteur, dirigeant de ce fait du fluide de transfert de chaleur liquide vers ledit réacteur adsorbant, et vaporiser au moins une partie dudit fluide de transfert de chaleur liquide dans ledit réacteur adsorbant et utiliser ledit fluide de transfert de chaleur vaporisé pour entraîner ledit fluide de transfert de chaleur liquide vers ledit réacteur adsorbant.

42. Procédé de la revendication 41, dans lequel ledit réfrigérant gazeux polaire est de l'ammoniac et ledit sel métallique comprend du SrCl₂, du SrBr₂, du CaCl₂, du CaBr₂, du Cal₂, du CoCl₂, du CoBr₂, du BaCl₂, du BaBr₂, du MgCl₂, du MgBr₂, du FeCl₂, du FeBr₂, du NiCl₂, du ZnCl₂, du SnCl₂, du MnCl₂, du MnBr₂, ou du CrCl₂ ou des mélanges de ceux-ci.

43. Procédé de la revendication 41, dans lequel ledit système comprend une pluralité de réacteurs (110, 120, 130, 140) et chaque réacteur contient un composé complexe différent à l'intérieur, ledit procédé consistant à diriger au moins une partie de la chaleur provenant d'un réacteur d'adsorption exothermique vers un réacteur de désorption endothermique pour provoquer la réaction dans celui-ci.

44. Procédé de la revendication 43, dans lequel ledit système à réaction comprend trois réacteurs ou plus, chaque réacteur contenant un composé complexe différent à l'intérieur, chacun desdits composés complexes différents ayant une pression de vapeur gazeuse différente sensiblement indépendante de la concentration de réactant gazeux, ledit procédé consistant à diriger du fluide de transfert de chaleur entre des réacteurs contenant les produits réactionnels à pressions de vapeur successives immédiatement supérieure et immédiatement inférieure.

45. Appareil à système à réaction de sorption comprenant: une pluralité de réacteurs (10, 20) contenant un adsorbant solide pour alternativement adsorber sur et désorber de celui-ci un réfrigérant, lesdits réacteurs comprenant des moyens d'échange de chaleur de réacteur (16, 17) pour diriger un fluide de transfert de chaleur en communication d'échange de chaleur avec ledit adsorbant; des moyens (13, 36) pour chauffer lesdits premier et deuxième réacteurs; des moyens de condensation (12); des moyens d'évaporation (14); des moyens de rejet de chaleur (22, 21, 41) communiquant avec lesdits moyens d'échange de chaleur de réacteur de chacun des réacteurs pour rejeter de la chaleur au cours de l'adsorption dans ceux-ci, les moyens de rejet de chaleur comprenant un premier conduit (41) pour diriger du fluide de transfert de chaleur vaporisé à partir d'un réacteur adsorbant vers lesdits moyens de condensation, et un deuxième conduit (21, 22) en aval desdits moyens de condensation pour diriger du fluide de transfert de chaleur condensé desdits moyens de condensation vers un réacteur adsorbant; l'appareil comprenant en outre un fluide de transfert de chaleur contenu dans lesdits moyens de rejet de chaleur, à changement de phase de liquide à gaz à une température égale à ou inférieure à la température d'adsorption dans un réacteur adsorbant, caractérisé par des moyens de déplacement de fluide actionnés par vapeur comprenant un ou plusieurs conduits de pression de gaz (23) mettant en communication un réacteur désorbant avec ledit deuxième conduit (22) des moyens de rejet de chaleur à une jonction (15) en aval dudit condenseur pour forcer du fluide de transfert de chaleur en phase liquide traversant ladite jonction vers un moyen d'échange de chaleur de réacteur adsorbant avec du réfrigérant gazeux désorbé ou du fluide de transfert de chaleur vaporisé.

46. Appareil de la revendication 45, dans lequel ledit fluide de transfert de chaleur est de composition identique à celle dudit réfrigérant.

47. Appareil de la revendication 45, dans lequel lesdits moyens de déplacement de fluide comprennent une pompe à actionnement par gaz (51, 53) entraînée par la pression du fluide de transfert de chaleur vaporisé ou du réfrigérant gazeux.

48. Appareil de la revendication 47, dans lequel ladite pompe comprend une pompe à bulles (15) ayant un tuyau généralement vertical (22) contenant du fluide de transfert de chaleur en phase liquide communiquant avec lesdits moyens d'échange de chaleur de réacteur (17) et avec un ou plusieurs conduits de pression de gaz (23) pour diriger du fluide de transfert de chaleur vaporisé ou du réfrigérant gazeux désorbé pour entraîner ledit fluide d'échange de chaleur en phase liquide le long dudit tuyau vertical.

49. Appareil de la revendication 46, dans lequel lesdits moyens de déplacement de fluide comprennent un réservoir (50) pour contenir du fluide de transfert de chaleur liquide et comprennent un ou plusieurs éjecteurs (51, 53) pour pomper du réfrigérant liquide dans ledit réservoir vers lesdits réacteurs.

50. Appareil de la revendication 45, dans lequel lesdits moyens de déplacement de fluide comprennent en outre un chauffage supplémentaire (47, 49) coopérant avec ledit deuxième conduit desdits moyens de rejet de chaleur pour chauffer et vaporiser du fluide de transfert de chaleur ou du réfrigérant liquide dans celui-ci pour entraîner du fluide de transfert de chaleur liquide ou du réfrigérant liquide vers les moyens d'échange de chaleur de réacteur pour refroidir un réacteur adsorbant.

51. Appareil de la revendication 50, comprenant des premiers clapets unidirectionnels (37) pour empêcher un écoulement retour du fluide de transfert de chaleur ou réfrigérant liquide chauffé le long dudit deuxième conduit desdits moyens de rejet de chaleur.

52. Appareil de la revendication 45, comprenant des voies de passage (61, 64) pour diriger du réfrigérant gazeux désorbé dudit adsorbant solide vers lesdits moyens d'échange de chaleur de réacteur.

53. Appareil de la revendication 52, comprenant un clapet actionné sélectivement (63, 66) coopérant avec lesdites voies de passage et ledit premier conduit desdits moyens de rejet de chaleur pour diriger sélectivement du réfrigérant gazeux désorbé vers lesdits moyens d'échange de chaleur de réacteur au cours d'une désorption de réacteur, et diriger sélectivement du réfrigérant vaporisé d'un réacteur vers un condenseur au cours d'une adsorption de réacteur.

54. Appareil de la revendication 52, comprenant des clapets actionnés par pression (72, 74) coopérant avec ladite première partie desdits moyens de rejet de chaleur et lesdites voies de passage et étant sensibles à une pression de réfrigérant désorbé pour se fermer au cours d'une désorption de réacteur, dirigeant de ce fait du réfrigérant gazeux désorbé vers lesdits moyens d'échange de chaleur de réacteur au cours d'une désorption de réacteur, et pour s'ouvrir au cours d'une adsorption de réacteur, dirigeant de ce fait du réfrigérant vaporisé d'un réacteur vers un condenseur.

55. Appareil de la revendication 45, dans lequel lesdits moyens de condensation comprennent un premier et un deuxième condenseur, ledit premier condenseur (12) communiquant avec ladite boucle de conduits de rejet de chaleur pour condenser ledit fluide de transfert de chaleur, et ledit deuxième condenseur (65) communiquant avec un conduit de pression de gaz pour condenser du réfrigérant désorbé.

56. Appareil de la revendication 55, comprenant des clapets (60, 67) actionnés sélectivement, coopérant avec ladite boucle de conduits de rejet de chaleur pour sélectivement diriger du fluide de transfert de chaleur vaporisé d'un réacteur vers ledit premier condenseur (12) au cours d'une adsorption de réacteur et pour pressuriser ladite boucle avec du fluide de transfert de chaleur vaporisé provenant d'un moyen d'échange de chaleur de réacteur désorbant au cours d'une désorption de réacteur.

57. Appareil de la revendication 45, dans lequel lesdits moyens de déplacement de fluide comprennent des moyens à interface mobile (116) sensible à une pression de vapeur sur un premier côté de ceux-ci pour déplacer du liquide sur le second côté de ceux-ci.

58. Appareil de la revendication 57, dans lequel lesdits moyens de déplacement de fluide comprennent un réservoir (101) coopérant avec lesdits moyens à interface mobile.

59. Appareil de la revendication 58, dans lequel ledit réservoir communique avec ledit ou lesdits conduits de pression de gaz (102, 108) pour recevoir du réfrigérant gazeux désorbé à l'intérieur, et avec ledit condenseur pour recevoir du fluide de transfert de chaleur.

60. Appareil de la revendication 58, dans lequel lesdits moyens à interface mobile (116) comprennent un diaphragme positionné dans ledit réservoir.

61. Appareil de la revendication 45, dans lequel lesdits moyens de déplacement de fluide comprennent un ou plusieurs réservoirs (85, 86) pour contenir du fluide de transfert de chaleur liquide et communiquant avec lesdits réacteurs via ledit deuxième conduit desdits moyens de rejet de chaleur, et dans lequel ledit ou lesdits conduits de pression de gaz reçoivent du réfrigérant gazeux désorbé d'un réacteur désorbant.

62. Appareil de la revendication 61, dans lequel ledit ou lesdits réservoirs comprennent en outre un chauffage supplémentaire (89) coopérant avec ceux-ci pour chauffer et vaporiser du réfrigérant pour déplacer du fluide de transfert de chaleur liquide à partir dudit réservoir vers lesdits moyens d'échange de chaleur de réacteur.

63. Appareil de la revendication 45, dans lequel chacun desdits réacteurs contient un adsorbant solide différent à l'intérieur, chaque adsorbant solide comprenant un produit réactionnel entre un réactant solide et un réactant gazeux adsorbé sur celui-ci, chacun desdits produits réactionnels différents ayant une pression de vapeur de réactant gazeux différente, sensiblement indépendante de la concentration de réactant gazeux.

64. Appareil de la revendication 63, comprenant une pluralité de trois réacteurs ou plus (110, 120, 130, 140), lesdits produits réactionnels différents à l'intérieur de ceux-ci ayant un ordre croissant de pression de vapeur de réactant gazeux, la température d'adsorption d'un produit réactionnel à pression de vapeur inférieure à une pression de réaction faible étant supérieure à la température de désorption du produit réactionnel à pression de vapeur successive immédiatement supérieure à une pression de réaction élevée, et comprenant des moyens pour diriger du fluide de transfert de chaleur entre lesdits réacteurs pour rejeter de la chaleur d'adsorption d'un réacteur à température la plus élevée vers le réacteur à température immédiatement inférieure.

65. Appareil de la revendication 45, comprenant une source de chauffage unique (175) pour vaporiser du fluide de transfert de chaleur liquide, un clapet à trois voies (171) pour diriger sélectivement du fluide de transfert de chaleur vaporisé vers lesdits réacteurs, respectivement, et des conduits mettant en communication ladite source de chaleur unique et ledit clapet à trois voies pour diriger du réfrigérant vaporisé de ladite source de chaleur vers ledit clapet.

66. Appareil de la revendication 65, dans lequel lesdits réacteurs comprennent une section de transfert de chaleur (171) en communication de transfert de chaleur avec ledit adsorbant solide pour condenser ledit fluide de transfert de chaleur vaporisé.

67. Appareil de la revendication 45, dans lequel lesdits réacteurs contiennent un composé complexe formé par l'adsorption d'un réfrigérant gazeux polaire sur un sel métallique comprenant un halogénure, un nitrate, un nitrite, un oxalate, un sulfate, ou un sulfite d'un métal alcalin, d'un métal alcalino-terreux, d'un métal transitoire, de zinc, de cadmium, d'étain, d'aluminium, de fluoborate de sodium, ou d'un chlorure métallique double, et formé selon une méthode d'augmentation des vitesses de réaction d'adsorption et de désorption en restreignant l'expansion volumétrique du composé complexe au cours d'au moins la réaction d'adsorption initiale.

68. Appareil de la revendication 67, dans lequel ledit réfrigérant gazeux polaire est de l'ammoniac et ledit sel métallique comprend du SrCl₂, du SrBr₂, du CaCl₂, du CaBr₂, du Cal₂, du CoCl₂, du CoBr₂, du BaCl₂, du BaBr₂, du MgCl₂, du MgBr₂, du FeCl₂, du FeBr₂, du NiCl₂, du ZnCl₂, du SnCl₂, du MnCl₂, du MnBr₂, ou du CrCl₂ ou des mélanges de ceux-ci

69. Appareil de la revendication 68, dans lequel ledit fluide de transfert de chaleur comprend ledit réfrigérant ammoniac.

70. Appareil de la revendication 62, dans lequel ledit fluide de transfert de chaleur comprend ledit réfrigérant, et dans lequel ledit condenseur communique avec lesdits moyens de rejet de chaleur et ledit ou lesdits réservoirs pour foumir du réfrigérant condensé à ceux-ci.

71. Appareil des revendications 63 ou 64, dans lequel de la chaleur d'adsorption dans un réacteur à température inférieure, d'étage inférieur, (110, 120) est rejetée par du réfrigérant condensé dans lesdits moyens d'échange de chaleur de réacteur, et de la chaleur d'adsorption dans un réacteur à température supérieure, d'étage supérieur (130, 140) est rejetée par du fluide de transfert de chaleur liquide dans lesdits moyens d'échange de chaleur de réacteur, et dans lequel ladite boucle de rejet de chaleur comprend un ou plusieurs conduits de réfrigérant (144) coopérant avec lesdits moyens d'échange de chaleur de réacteur pour faire circuler du réfrigérant des moyens d'échange de chaleur du réacteur à température inférieure vers ledit condenseur et le renvoyer vers lesdits moyens d'échange de chaleur du réacteur à température inférieure, et un ou plusieurs conduits de fluide de transfert de chaleur (137) pour diriger du fluide de transfert de chaleur entre les moyens d'échange de chaleur d'un réacteur à température supérieure et un réacteur à température inférieure.
